(19) Europäisches Patentamt
European Patent Office
Office européen des brevets

(11) EP 1 609 205 B1

(12) **FASCICULE DE BREVET EUROPEEN**

(45) Date de publication et mention de la délivrance du brevet:
**28.04.2010 Bulletin 2010/17**

(21) Numéro de dépôt: **04742317.3**

(22) Date de dépôt: **23.03.2004**

(51) Int Cl.:
***H01M 10/05*** *(2010.01)* ***H01M 10/0565*** *(2010.01)*

(86) Numéro de dépôt international:
**PCT/FR2004/000707**

(87) Numéro de publication internationale:
**WO 2004/091033 (21.10.2004 Gazette 2004/43)**

(54) **COMPOSITION RETICULABLE POUR ELECTROLYTE DE BATTERIE**

VERNETZBARE ZUSAMMENSETZUNG FÜR BATTERIEELEKTROLYT

SETTING COMPOSITION FOR A BATTERY ELECTROLYTE

(84) Etats contractants désignés:
**AT BE BG CH CY CZ DE DK EE ES FI FR GB GR HU IE IT LI LU MC NL PL PT RO SE SI SK TR**

(30) Priorité: **03.04.2003 FR 0304150**

(43) Date de publication de la demande:
**28.12.2005 Bulletin 2005/52**

(73) Titulaire: **RHODIA CHIMIE**
**92512 Boulogne-Billancourt (FR)**

(72) Inventeurs:
- **GAMBUT-GAREL, Lucile**
  **F-69003 LYON (FR)**
- **VERGELATI, Carroll**
  **F-38118 SAINT BAUDILLE DE LA TOUR (FR)**
- **SANCHEZ, Jean-Yves**
  **F-38330 SAINT ISMIER (FR)**
- **ALLOIN, Fannie**
  **F-38220 VIZILLE (FR)**

(74) Mandataire: **Valentino, Cédric**
**Rhodia Services DPI**
**Centre de Recherches de Lyon**
**BP 62**
**69192 Saint-Fons Cedex (FR)**

(56) Documents cités:
**EP-A- 0 945 476**
**US-A- 5 037 712**
**US-A1- 2002 051 911**

- **DATABASE WPI Derwent Publications Ltd., London, GB; AN 2000-434604 XP002274206 & JP 2000 150308 A (DAISO) 30 mai 2000 (2000-05-30)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

EP 1 609 205 B1

## Description

Le domaine de la présente invention concerne le domaine des batteries et des électrolytes polymères pour batteries et plus particulièrement le domaine des batteries au lithium.

Plus précisément, la présente invention a pour objet une nouvelle composition polymérisable et/ou réticulable pour électrolyte de batterie, un nouvel électrolyte polymère obtenu par polymérisation et/ou réticulation de cette nouvelle composition ainsi qu'une nouvelle batterie polymère.

Historiquement, les batteries au plomb ont été les plus couramment utilisées. Cependant, la technologie au plomb avait de nombreux inconvénients liés au poids des batteries, à la fragilité en cours de fonctionnement ainsi qu'à l'utilisation d'un liquide corrosif. Ceci a conduit au développement de batteries alcalines dont les électrodes étaient soit à base de nickel et de cadmium (batteries nickel-cadmium), soit à base d'oxyde de nickel et de zinc (batteries zinc-nickel), soit à base d'oxyde d'argent couplé à du zinc, du cadmium ou du fer (batteries à l'oxyde d'argent). Toutes ces technologies utilisent une solution de potasse comme électrolyte et présentent comme inconvénient majeur une densité d'énergie massique faible au regard des besoins liés au développement des équipements portables. C'est ainsi que les fabricants ont développés une nouvelle filière basée sur des batteries au lithium utilisant une électrode négative à base de lithium métallique (d'où l'appellation batterie « lithium-métal »). Cependant, les problèmes liés à une mauvaise reconstitution de l'électrode négative de lithium au cours des charges successives a vite débouchés sur un nouveau type d'électrode négative à base de carbone, utilisé comme composé d'insertion du lithium (d'où l'appellation batterie « lithium-ion »).

Pour les batteries au lithium, le principe de fonctionnement se résume de la manière suivante :

Au cours de la charge électrochimique, les ions de métal de transition du matériau d'électrode positive sont oxydés, ce qui induit la désintercalation du lithium. La circulation des électrons est imposée dans le circuit extérieur et une quantité équivalente molaire d'ions lithium traversent l'électrolyte qui est un conducteur ionique et isolant électronique. Ceci permet l'intercalation du lithium à l'électrode négative. Lors de la décharge de la batterie, c'est-à-dire en cours d'utilisation, c'est le phénomène inverse qui s'opère spontanément.

Dans les batteries, le conducteur ionique ou électrolyte, qui sépare les électrodes, est un élément clé. D'une part, son état, liquide, solide ou gélifié affecte la sûreté du système et d'autre part, sa conductivité détermine la gamme de température de fonctionnement. Des électrolytes liquides à base de carbonates sont couramment utilisés. Cependant, ils ne présentent pas les conditions optimums de sécurité liées à la manipulation d'un liquide corrosif. En effet, ce type de batterie peut-être le siège d'incidents tels qu'un emballement thermique conduisant à la formation de gaz, augmentant ainsi la pression interne de la batterie et le risque d'explosion. C'est pour cette raison que des normes strictes de sécurité imposent aux fabricants l'usage de boîtiers sophistiqués, augmentant ainsi le prix de revient d'une unité.

Afin de palier à cet inconvénient majeur, l'industrie des batteries a développée une nouvelle technologie basée sur des électrolytes polymères solides à anode de lithium, d'où l'appellation de « batterie lithium-polymère ». Du fait de son caractère solide et sous forme de film, ce nouveau type d'électrolyte permet le développement de batterie plus sûre et ayant une grande variété de formes. La faible épaisseur des films constitués permet une augmentation du rendement énergétique à faible densité de courant. L'un des premiers « polymères secs » étudié a été le polyoxyéthylène pour des applications de transport. Cependant, l'un des inconvénients de ce type de polymère est lié à une faible conductivité pour une utilisation à température ambiante et à fortiori aux basses températures. C'est donc un des inconvénients majeurs qui devient critique pour une utilisation de ces batteries dans des conditions extrêmes comme par exemple pour les batteries de satellites géostationnaires en cours de fonctionnement dans l'espace.

Les professionnels concernés ont donc cherché à mettre au point de nouveaux électrolytes polymères. A titre illustratif, la demande international W02000/25323 décrit une composition réticulable pour former un électrolytes polymère de batterie comprenant un polysiloxane constitué de groupements polyoxyéthylènes ou de groupements carbonates cycliques ayant au moins deux SiH réactifs, un réticulant ayant au moins deux groupements réactifs de type alcényle, un catalyseur d'hydrosilylation et un sel d'électrolyte. Cette composition est réticulée thermiquement par chauffage entre 70 et 100°C pendant une durée d'environ 6 heures pour obtenir un polymère électrolyte. Les inconvénients majeurs de ce type de préparation sont liés au coût énergique élevé de fabrication du polymère électrolyte ainsi qu'à une vitesse de réticulation lente ce qui est un frein à une application industrielle.

Les industries du domaine technique considéré sont donc dans l'attente de nouvelles compositions pour électrolyte de batterie permettant d'obtenir des polymères électrolytes ayant des niveaux suffisants de conductivité pour une utilisation dans une gamme de température adaptée allant de -20° à +80°C et des électrolytes polymères utilisant des voies de préparation à coût énergique faible.

L'objectif principal de la présente invention est donc de proposer une nouvelle composition polymérisable et/ou réticulable pour électrolyte polymère de batterie permettant d'obtenir des polymères électrolytes ayant des niveaux suffisants de conductivité pour une utilisation dans une gamme de température adaptée allant de -20° à +80°C.

Un autre objectif de la présente invention est de fournir de nouvelles compositions pour électrolyte polymère de batterie polymérisable et/ou réticulable par voie photochimique ou sous faisceau d'électron ne nécessitant pas un

coût énergique élevé pour la préparation du polymère électrolyte.

Un autre but de l'invention est de proposer une nouvelle composition polymérisable et/ou réticulable pour électrolyte polymère de batterie permettant d'obtenir des polymères électrolytes selon des vitesses de réticulation élevées.

L'invention vise également un électrolyte polymère solide obtenu par polymérisation et/ou réticulation de la composition selon l'invention.

L'invention vise enfin une batterie polymère et plus particulièrement une batterie lithium polymère.

Ces objectifs parmi d'autres sont atteints par la présente invention qui concerne une composition polymérisable et/ou réticulable sous irradiation, de préférence actinique et/ou par faisceau(x) d'électrons, par voie cationique, pour électrolyte de batterie **caractérisée en ce qu**'elle comprend:

(a) au moins un polyorganosiloxane (POS) (A) comprenant des motifs siloxyles de formule (1) :

$$R^1_xR^2_yR^3_zSiO_{(4-x-y-z)/2} \qquad (I)$$

formule dans laquelle les divers symboles ont la signification suivante :

- x, y et z sont des nombres entiers avec 1 ≤x+y+z≤ 3 ;
- les radicaux $R^1$, $R^2$ et $R^3$ sont identiques ou différents entre eux et représentent un radical alkyle en $C_1$-$C_{12}$, linéaire ou ramifié, éventuellement substitué, un radical cycloalkyle en $C_5$-$C_{10}$, éventuellement substitué, un radical aryle en $C_6$-$C_{18}$, éventuellement substitué, un radical aralkyle, éventuellement substitué ou un radical -$OR^4$ où $R^4$ représente un hydrogène, un radical alkyle, linéaire ou ramifié, ayant de 1 à 15 atomes de carbone , et
- avec comme conditions que le POS (A) comprend par molécule :
  - au moins 2 motifs siloxyles de formule (I) dont un des radicaux comprend une fonction de type époxy (Epx) et éventuellement une fonction de type éther (Eth) ; et
  - au moins un des motifs siloxyles de formule (I) comprend au moins un radical éther de polyoxyalkylène (Poa) ;

(b) au moins un sel électrolyte; et

(c) une quantité efficace d'au moins un photo-amorceur cationique.

Selon une première variante de l'invention, à la composition telle que définie ci-dessus peut-être ajouté au moins un POS (B) dont les motifs siloxyles sont définis par la formule (II) identique à la formule (I) avec comme condition que le POS (B) comprend par molécule au moins 2 motifs siloxyles comprenant une fonction de type époxy (Epx) et éventuellement une fonction de type éther (Eth).

Il est à noter que les radicaux porteurs d'une fonction de type époxy (Epx) présentent l'avantage d'être à la fois réactifs quand à la réticulation ou polymérisation tout en conduisant à la formation de ponts de type polyéther après réticulation ou polymérisation ce qui est un facteur très favorable pour la conductivité de l'électrolyte polymère. La présence éventuelle de fonction de type éther (Eth) dans le même radical accentue encore l'effet avantageux sur la conductivité de l'électrolyte polymère.

Par quantité efficace d'au moins un photo-amorceur cationique, on entend, au sens de l'invention, la quantité suffisante pour amorcer la polymérisation ou réticulation. Cette quantité doit être la plus faible possible afin de permettre une meilleure conservation dans le temps de la composition. Des concentrations utiles en photo-amorceur cationique se situent entre 0,1 % et 2 % et préférablement entre 0,2 % et 1 % en poids.

D'une manière avantageuse, les radicaux porteurs d'une fonction de type époxy (Epx) et pouvant éventuellement porter une fonction de type éther (Eth), sont choisis parmi les radicaux suivants :

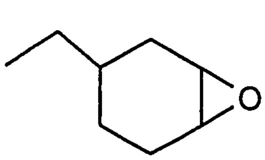

(III) ;

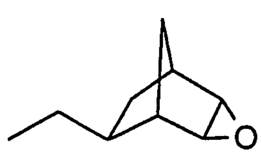

(IV) ;

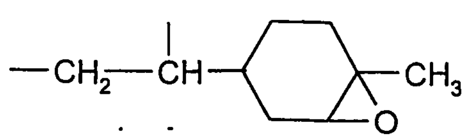

(V)

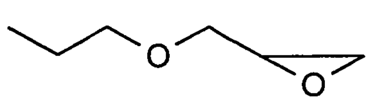

; et

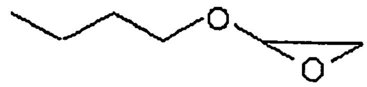

(VI) (VII)

Plus particulièrement, le (POS) (A) est un copolymère essentiellement linéaire statistique, séquencé ou à bloc, de formule générale moyenne (VIII) suivante :

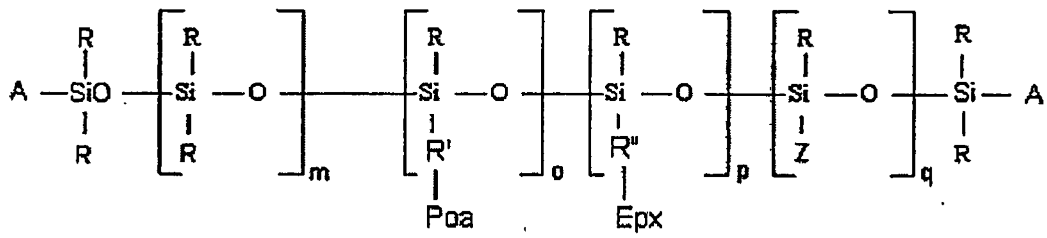

(VIII)

et pouvant éventuellement comporter des motifs de formule $RSiO_{3/2}$ (T) (le % de motifs T maximum sera déterminé de manière à ce que la composition reste sous une forme liquide),
formule dans laquelle :

- les symboles R, identiques ou différents entre eux, représentent chacun un radical alkyle en $C_1$-$C_{12}$, linéaire ou ramifié, éventuellement substitué, en particulier méthyle, éthyle, n-propyle, isopropyle ou n-butyle, de préférence méthyle, un radical aryle en $C_6$-$C_{18}$, en particulier un radical phényle, éventuellement substitué, un radical cycloalkyle en $C_5$-$C_{10}$, éventuellement substitué ou un radical aralkyle, éventuellement substitué;
- les symbole Z, identiques ou différents entre eux, représentent chacun un radical hydroxyle ou alkoxyle, linéaire ou ramifié, ayant de 1 à 15 atomes de carbone ;
- les symboles R', identiques ou différents entre eux, représentent chacun un radical comprenant de 2 à 50, de préférence de 2 à 20 atomes de carbone ; et encore plus préférentiellement un radical n-propyle ;
- les symboles Poa, identiques ou différents entre eux, représentent chacun des groupements de type éther de polyoxyalkylène, de préférence des groupements éther de polyoxyéthylène et/ou éther de polyoxypropylène et encore plus préférentiellement un groupement $-O-(CH_2CH_2O)_m-CH_3$ avec $m \leq 14$, de préférence compris entre 5 et 14 et encore plus préférentiellement m est égale à 6.
- les symboles R", identiques ou différents entre eux, représentent chacun un radical comprenant de 2 à 50, de préférence de 2 à 20 atomes de carbone, radical qui peut éventuellement comprendre des fonctions de type éther -O- ;
- les symboles (Epx) représentent une fonction époxy, cette fonction étant soit présente en terminaison de la chaîne hydrocarbonée R", du type :

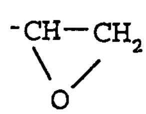

soit, dans une position intermédiaire de la chaîne hydrocarbonée R", du type :

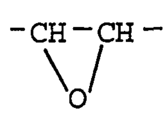

cette position intermédiaire pouvant être présente sur une partie cyclique de la chaîne, en particulier un cycle ayant de 5 à 7 membres, de préférence un cycle à 6 membres;

- les symboles A, identiques ou différents entre eux, représentent chacun un radical monovalent choisi parmi -R, H, -R''-Epx et -$OR^4$ où $R^4$ représente un hydrogène, un radical alkyle, linéaire ou ramifié, ayant de 1 à 15 atomes de carbone.
- m est un nombre entier ou fractionnaire supérieur ou égal à 0, de préférence compris entre 5 et 200, et encore plus préférentiellement entre 10 et 100 ;
- o est un nombre entier ou fractionnaire supérieur ou égal à 1, de préférence compris entre 1 et 100, et encore plus préférentiellement compris entre 5 et 30 ;
- p est un nombre entier ou fractionnaire supérieur ou égal à 2, de préférence compris entre 3 et 200, et encore plus préférentiellement compris entre 10 et 40; et
- q est un nombre entier ou fractionnaire supérieur ou égal à 0 ; de préférence compris entre 0 et 10.

De manière préférentielle, les nombres m, o et p sont choisi de manière à satisfaire la condition suivante :

$$\text{le ratio } (m+p+q)/o \leq 10.$$

De manière avantageuse, les groupements de type (-R''-Epx) sont choisi.- parmi les groupements (III), (IV), (V), (VI) et (VII) définis ci-dessus.

De manière préférée, les groupements (-R'-Poa) sont choisi parmi :
$-(CH_2)_3-O-(CH_2CH_2-O)_m-CH_3$ ; $-(CH_2)_2-O-(CH_2CH_2-O)_m-CH_3$ ;
$-(CH_2)_3-O-(CH(CH_3)-CH_{2-}-O)_m-CH_3$ et $-(CH_2)_2-O-(CH(CH_3)-CH_2-O)_m-CH_3$
avec m≤14, de préférence compris entre 5 et 14 et encore plus préférentiellement égal à 6.

Selon une caractéristique remarquable de l'invention, le sel électrolyte (b) est constitué :

- d'un cation choisi parmi le groupe constitué par les entités suivantes : les cations métalliques, les ions ammoniums, les ions amidiniums et les ions guanidiums ; et
- d'un anion choisi parmi le groupe constitué par les entités suivantes : les ions chlorures, les ions bromures, les ions iodures, les ions perchlorates, les ions thyocyanates, les ions tétrafluoroborates, les ions nitrates, $AsF6^-$, $PF6^-$, les ions stéarylsulfonates, les ions trifluorométhanesulfonates, les ions octylsulfonates, les ions dodécylbenzènesulfonates, $R^4SO_3^-$, $(R^4SO_2)(R^5SO_2)N^-$ et $(R^4SO_2)(R^5SO_2)(R^6SO_2)C^-$, dans chaque formule les radicaux $R^4$, $R^5$ et $R^6$ sont identiques ou différents et représentent des groupements électro-attracteurs.

D'une manière avantageuse, les radicaux $R^4$, $R^5$ et $R^6$ sont choisi parmi des groupements électro-attracteurs de type perfluoroaryle ou perfluoroalkyle comprenant de 1 à 6 atomes de carbone.

Selon une variante de l'invention, le sel électrolyte (b) comprend un cation métallique choisi parmi les métaux alcalins et alcalino-terreux des groupes 1 et 2 de la classification périodique [Chem. & Eng. News, vol 63, n°5, 26 du 4 Février 1985]. D'une manière particulièrement avantageuse, le cation métallique est soit de type lithium soit choisi parmi les métaux de transition, par exemple le manganèse, le fer, le cobalt, le nickel, le cuivre, le zinc, le calcium, le manganèse ou l'argent.

Les sels électrolytes de type lithium utiles selon l'invention peuvent être choisis parmi le groupe constitué par les composés suivants :

$LiClO_4$, $LiBF_4$, $LiPF_6$, $LiAsF_6$, $LiCF_3SO_3$, $LiN(CF_3SO_2)_2$, $Li(C_2F_5SO_2)_2$ et un mélange de ces composés.

D'une manière préférentielle, la quantité de sel électrolyte de lithium de la composition est définie de façon à ce que le ratio molaire O/Li soit compris entre 15 et 40, préférentiellement entre 10 et 30 et encore plus préférentiellement compris entre 20 et 25.

Bien que l'électrolyte polymère selon l'invention soit un solide après.- réticulation et/ou polymérisation, l'enseignement de l'invention ne se limite pas au seul solide. En effet, on peut adjoindre à la composition un électrolyte organique (d) afin d'obtenir après réticulation et/ou polymérisation une forme liquide ou gélifiée. Le choix se portera de préférence sur les composés choisis parmi le groupe constitué du carbonate de propylène, carbonate d'éthylène, carbonate de diéthyle, carbonate de diméthyle, carbonate d'éthylméthyle, γ-butyrolactone, 1,3-dioxolane, diméthoxyéthane, tétrahydrofurane, diméthyl sulfoxide et polyéthylène glycol diméthyléther.

L'initiation de la polymérisation et/ou réticulation de la composition selon l'invention est rendue possible grâce à la présence du photo-amorceur (c) cationique. En effet, la composition comprend des polyorganosiloxanes (POS)

porteurs de fonctions époxydes qui sont réactives car le photo-amorceur, après absorption d'énergie, par exemple UV, libère un acide fort : $H^+$ (d'où l'appellation photo-amorceur cationique) qui va permettre l'initiation et la propagation de la polymérisation en chaîne par formation d'entités.

Tout photoamorceur cationique peut convenir selon l'invention. De manière avantageuse, les photo-amorceurs cationiques peuvent être choisis parmi les borates d'onium (pris à eux seuls ou en mélange entre eux) d'un élément des groupes 15 à 17 de la classification périodique [Chem. & Eng. News, vol.63, N° 5, 26 du 4 février 1985] ou d'un complexe organométallique d'un élément des groupes 4 à 10 de la classification périodique [même référence].

Parmi les photo-amorceurs cationiques utiles selon l'invention, on choisira ceux de formule dont l'entité cationique du borate est sélectionnée parmi :

a) les sels d'onium de formule (IX) :

$$[(R^1)_n - A - (R^2)_m]^+ \qquad (IX)$$

formule dans laquelle :

- A représente un élément des groupes 15 à 17 tel que par exemple : I, S, Se, P ou N ;
- $R^1$ représente un radical aryle carbocyclique ou hétérocyclique en $C_6$-$C_{20}$, ledit radical hétérocyclique pouvant contenir comme hétéroéléments de l'azote ou du soufre ;
- $R^2$ représente $R^1$ ou un radical alkyle ou alcényle linéaire ou ramifié en $C_1$-$C_{30}$ ; lesdits radicaux $R^1$ et $R^2$ étant éventuellement substitués par un groupement alcoxy en $C_1$-$C_{25}$, alkyle en $C_1$-$C_{25}$; nitro, chloro, bromo, cyano, carboxy, ester ou mercapto ;
- n est un nombre entier allant de 1 à v + 1, v étant la valence de l'élément A ; et
- m est un nombre entier allant de 0 à v - 1 avec n + m = v + 1,

b) les sels organométalliques de formule (X) :

$$(L^1L^2L^3M)^{+q}$$

formule dans laquelle :

- M représente un métal du groupe 4 à 10, notamment du fer, manganèse, chrome, cobalt,
- $L^1$ représente 1 ligand lié au métal M par des électrons $\pi$, ligand choisi parmi les ligands $\eta^3$-alkyl, $\eta^{5-}$ cyclopendadiènyl et $\eta^{7-}$ cycloheptatriènyl et les composés $\eta^6$ - aromatiques choisis parmi les ligands $\eta^6$-benzène éventuellement substitués et les composés ayant de 2 à 4 cycles condensés, chaque cycle étant capable de contribuer à la couche de valence du métal M par 3 à 8 électrons $\pi$ ;
- $L^2$ représente un ligand lié au métal M par des électrons $\pi$, ligand choisi parmi les ligands $\eta^7$-cycloheptatriènyl et les composés $\eta^6$-aromatiques choisis parmi les ligands $\eta^6$- benzène éventuellement substitués et les composés ayant de 2 à 4 cycles, condensés, chaque cycle étant capable de contribuer à la couche de valence du métal M par 6 ou 7 électrons $\pi$ ; et
- $L^3$ représente de 0 à 3 ligands identiques ou différents liés au métal M par des électrons $\sigma$, ligand(s) choisi(s) parmi CO et $NO_2^+$ ; la charge électronique totale q du complexe à laquelle contribuent $L^1$, $L^2$ et $L^3$ et la charge ionique du métal M étant positive et égale à 1 ou 2 ;

c) les sels d'oxoisothiochromanium possédant la formule (XI):

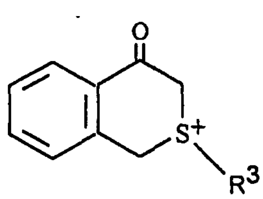

(XI)

où le radical $R^3$ représente un radical alkyle, linéaire ou ramifié, en $C_1$-$C_{20}$ , et

d) les sels organométalliques de formule (XIII) :

$(L_1L_2L_3M)^{+q}$ (XIII)

formule dans laquelle :

- M représente un métal du groupe 4 à 10, notamment du fer, manganèse, chrome ou cobalt ;
- L1 représente 1 ligand lié au métal M par des électrons π, le ligand étant préférentiellement choisi parmi les ligands η3-alkyl, η5- cyclopendadiènyl et η7 -cycloheptratriènyl et les composés η6 - aromatiques choisis parmi les ligands η6-benzène éventuellement substitués et les composés ayant de 2 à 4 cycles condensés, chaque cycle étant capable de contribuer à la couche de valence du métal M par 3 à 8 électrons π ;
- L2 représente un ligand lié au métal M par des électrons π, le ligand étant préférentiellement choisi parmi les ligands η7-cycloheptatriènyl et les composés η6-aromatiques choisis parmi les ligands η6- benzène éventuellement substitués et les composés ayant de 2 à 4 cycles condensés, chaque cycle étant capable de contribuer à la couche de valence du métal M par 6 ou 7 électrons π ; et
- L3 représente de 0 à 3 ligands identiques ou différents liés au métal M par des électrons σ, ligand(s) choisi(s) parmi CO et NO2+ ; la charge électronique totale q du complexe à laquelle contribuent L1, L2 et L3 et la charge ionique du métal M étant positive et égale à 1 ou 2.

D'autres photo-amorceurs cationiques utiles selon l'invention sont choisit parmi les entités anioniques de formule (XII) :

$[B\ X_a\ R_b]^-$ (XII)

formule dans laquelle :

- a et b sont des nombres entiers allant de 0 à 4 avec a + b = 4 ;
- les symboles X représentent un atome d'halogène (chlore, fluor) avec a = 0 à 3 et une fonction OH (avec a = 0 à 2) ,
- les symboles R sont identiques ou différents et représentent :

a) un radical phényle substitué par au moins un groupement électro-attracteur choisi parmi CF3, N02, CN ou par au moins 2 atomes de fluor, ce lorsque l'entité cationique est un onium d'un élément des groupes 15 à 17,
b) un radical phényle substitué par au moins un élément ou un groupement électro-attracteur choisi parmi un atome de fluor CF3, N02, CN, ce lorsque l'entité cationique est un complexe organométallique d'un élément des groupes 4 à 10, et/ou
c) un radical aryle contenant au moins deux noyaux aromatiques, éventuellement substitué par au moins un élément ou un groupement électro-attracteur choisi parmi un atome de fluor CF3, NO2, CN, quelle que soit.- l'entité cationique.

Sans que cela ne soit limitatif, sont données ci-après plus de précisions quant aux sous classes de borate d'onium et de borate de sels organométalliques plus particulièrement préférés dans le cadre de l'utilisation conforme à l'invention.

De manière particulièrement avantageuse, l'entité anionique du photo-amorceur cationique est choisi parmi le groupe constitué de:
$[B(C_6F_5)_4]^-$ $[B(C_6H_4CF_3)_4]^-$ $[B(C_6H_4CF_3)_4]^-$
$[(C_6F_5)_2BF_2]^-$ $[C_6F_5BF_3]^-$ $[B(C_6H_3F_2)_4]^-$
$[B(C_6F_4OCF_3)_4]^-$

Selon une autre variante avantageuse, l'entité cationique du photo-amorceur cationique est choisi parmi le groupe constitué de :
$[(\Phi)_2I]^+$ $[C_8H_{17}\text{-}O\text{-}\Phi\text{-}I\text{-}\Phi]^+$ $[(\Phi\text{-}CH_3)_2I]^+$
$[C_{12}H_{25}\text{-}\Phi\text{-}I\text{-}\Phi]^+$ $[(C_8H_{17}\text{-}O\text{-}\Phi)_2I]^+$ $[(C_8H_{17}\text{-}O\text{-}\Phi\text{-}I\text{-}\Phi)]^+$
$[\Phi_3S]^+$ $[(\Phi)_2\text{-}S\text{-}\Phi\text{-}C_8H_{17}]^+$ $[(CH_3\text{-}\Phi\text{-}I\text{-}\Phi\text{-}CH(CH_3)_2]^+$
$[\Phi\text{-}S\text{-}\Phi\text{-}S\text{-}(\Phi)_2]^+$ $[(C_{12}H_{25}\text{-}\Phi)_2I]^+$ $[(CH_3\text{-}\Phi\text{-}I\text{-}\Phi\text{-}OC_2H_5]^+$
le (η5 - cyclopentadiènyle) (η6 - toluène) Fe+,
(η5 - cyclopentadiènyle) (η6 - méthyl1-naphtalène) Fe+, et
(η5 - cyclopentadiènyle) (η6 - cumène) $Fe^+$.

Les photo-amorceurs cationiques de polymérisation et/ou réticulation particulièrement adaptés sont choisis parmi le groupe constitué de :
$[\Phi_2I]^1$, $[B(C_6F_5)_4]^-$ $[(C_8H_{17})\text{-}O\text{-}\Phi\text{-}I\text{-}\Phi)]^+$, $[B(C_6F_5)_4]^-$

$[C_{12}H_{25}\text{-}\Phi\text{-I-}\Phi]^+, [B(C_6F_5)_4]^- \ [(C_8H_{17}\text{-O-}\Phi)_2I]^+, [B(C_6F_5)_4]^-$
$[(C_8H_{17})\text{-O-}\Phi\text{-I-}\Phi)]^+, [B(C_6F_5)_4]^- \ [(\Phi)_3S]^+, [B(C_6F_5)_4]^-$
$[(\Phi)_2S\text{-}\Phi\text{-O-}C_8H_{17}]^+, [B(C_6H_4CF_3)_4]^- \ [(C_{12}H_{25}\text{-}\Phi)_2I]^+, [B(C_6F_5)_4]^-$
$[(\Phi)_3S]^+, [B(C_6F_4OCF_3)_4]^- \ [(\Phi\text{-}CH_3)_2I]^+, [B(C_6F_5)_4]^-$
$[\Phi\text{-}CH_3)_2I]^+, [B(C_6F_4OCF_3)_4]^- \ [CH_3\text{-}\Phi\text{-I-}\Phi\text{-}CH(CH_3)_2]^+, [B(C_6F_5)_4]^-$
($\eta^5$ - cyclopentadiènyle) ($\eta^6$ - toluène) $Fe^+$, $[B(C_6F_5)_4]^-$
($\eta^5$ - cyclopentadiènyle) ($\eta^6$ - méthyl1-naphtalène) $Fe^+$, $[B(C_6F_5)_4]^-$
($\eta^5$ - cyclopentadiènyle) ($\eta^6$ - cumène) $Fe^+$, $[B(C_6F_5)_4]^-$
et leur mélange.

Ces photo-amorceurs cationiques de polymérisation- et/ou réticulation peuvent se présenter en solution dans des solvants tels que l'isopropanol, le diacétone alcool ou le lactate de butyle.

Comme autres références littéraires pour définir les borates d'onium et les borates de sels organométalliques, on peut citer l'ensemble du contenu des demandes de brevet EP 0 562 897 et EP 0 562 922.

Comme autre exemple de sel d'onium utilisable comme photo-amorceur, on peut citer ceux divulgués dans les brevets américains US 4 138 255 et US 4 310 469.

On peut également utiliser d'autres photo-amorceurs cationiques, par exemple :

- ceux commercialisés par Union-Carbide (Photo-amorceur 6990® et 6974® triarylsulfonium hexafluoro-phosphate et hexaftuoroantimonate),
- les sels d'iodonium hexafluorophosphate ou hexafluoro-antimonate, ou
- les sels de ferrocénium de ces différents anions.

Selon une variante de l'invention, on peut utiliser comme composant (c) un système catalytique composé d'un photo-amorceur cationique en solution avec un polyorganosiloxane, de préférence en solution dans le polyorganosiloxane POS (B) décrit ci-dessus.

Selon une autre variante, on peut associer le photo-amorceur cationique avec un photo-amorceur radicalaire, par exemple à base de benzophénone. On peut citer, à titre d'exemples, ceux commercialisés par la société CIBA-GEIGY: IRGACURE 184®, IRGACURE 500®, DAROCURE 1173®, IRGACURE 1700®, DAROCURE 4265®, IRGACURE 907®, IRGACURE 369®, IRGACURE 261®, IRGACURE 784 DO®, IRGACURE 2959® et IRGACURE 651®.

Les photo-amorceurs radicalaires peuvent aussi contenir un ou plusieurs atomes de phosphore, comme ceux commercialisés par CIBA-GEIGY (IRGACURE 1700) ou BASF (LUCIRIN TPO).

Selon une autre variante, la composition selon l'invention comprend au moins un photosensibilisateur (e) hydrocarboné aromatique à un ou plusieurs noyaux aromatiques substitués ou non, ayant une absorption résiduelle de la lumière comprise entre 200 et 500 nm. Le photosensibilisateur (e) contenu au sein de la composition selon l'invention peut être de nature très variée. On peut utiliser les photosensibilisateurs décrits dans les documents US 4,939,069; US 4,278,751; US 4,147,552. De manière préférée, le photosensibilisateur (e) est choisi parmi le groupe de composés suivants:

4,4'diméthoxybenzoïne ; 2-4 diéthyl thioxanthone ;
2-éthylanfihraquinone ; 2-méthylanthraquinone ;
1,8-dihydroxyanthraquinone ; dibenzoylperoxyde ;
2,2-diméthoxy-2-phénylacétophénone ; benzoïne ;
2-hydroxy-2méthylpropiophénone ; benzaldéhyde ;
4-(2-hydroxyéthoxy)phényl-(2-hydroxy-2-méthylpropyl) cétone ;
benzoylacétone;

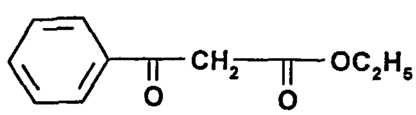
,

2-isopropylthioxenthone 1-chloro-4-propoxythioxanthone
4-isopropylthioxanthone et leur mélange.

La composition selon l'invention peut aussi comprendre des agents de renfort afin d'améliorer les propriétés mécaniques de l'électrolyte polymère obtenu après polymérisation et/ou réticulation. Par exemple, la composition selon l'invention pourra éventuellement comprendre de la silice traitée, de l'alumine traitée ou des résines polyorganosiloxanes.

L'invention concerne également un électrolyte polymère solide pour batterie obtenu par polymérisation et/ou réticulation par voie photochimique ou sous faisceau d'électron, en particulier sous rayonnement U.V, de la composition

polymérisable et/ou réticulable selon l'invention. La durée d'irradiation peut-être courte et elle est généralement inférieure à 20 secondes. Cet électrolyte polymère comprend des fonctions éther de polyoxyalkylène et éventuellement des groupes résiduels n'ayant pas réticulés et résultants de l'ouverture des cycles époxy.

Un autre objet de l'invention est une batterie comprenant l'électrolyte polymère solide obtenu par polymérisation et/ou réticulation décrit ci-dessus, placé entre une anode et une cathode. D'une manière avantageuse, au moins un des constituants de la cathode est choisi parmi le groupe constitué des entités suivantes :

lithium métallique, alliages de lithium, matériaux inorganiques comprenant des insertions de lithium et matériaux carbonatés comprenant des insertions de lithium.

L'application de ces batteries est particulièrement adaptée pour les domaines de stockage de l'électricité suivants : les alimentations de secours pour les systèmes industriels et de télécommunication, les alimentations secondaires des équipements portables, les batteries pour applications satellites géostationnaires et les batteries pour véhicule électrique et hybride.

Les exemples suivants sont donnés à titre illustratif et ils ne peuvent être considérés comme une limite de la portée de l'invention.

**EXEMPLES**

Exemple 1 : préparation d'un polyorganosiloxane portant des fonctions époxy et éther de polyoxyéthylène :

Dans un réacteur de 2 L muni d'une agitation à 3 hélices inclinées, de deux contre-pales permettant la mesure de température, de 2 pompes à membrane et d'une ampoule de coulée, on introduit dans le réacteur 497,2 g de xylène et 10,1 g d'un catalyseur hétérogène Pt/Noir. Le milieu réactionnel est chauffé à 80°C sous agitation et sous atmosphère inerte d'azote. Lorsque la température de 80°C est atteinte; les réactifs suivants sont ajoutés en co-coulée en 3 heures :

- 500,8 g (1,47 mole) d'allylpolyéther Uniox MA300® de la société NOF Corportation d'une part par une première pompe à membrane ; et
- 285,1 g d'huile silicone à fonction SiH de structure type $MD'_{50}D_{25}M$ où : $M = (CH_3)_3SiO_{1/2}$, $D = (CH_3)_2SiO_{2/2}$ et $D' = (CH_3)HSiO_{2/2}$.

Lorsque le taux de transformation des fonctions SiH atteint 40%, sont coulés, en 2h30, 295,2 g d'allyl glycidyl éther (poids moléculaire: 113 g/mol soit 2,6 moles). En fin de coulée, le taux de transformation est de 73%. La réaction est laissée pendant 36 heures à 86°C sous agitation pour avoir un taux de transformation de 100%. Après retour à température ambiante, le milieu réactionnel est filtré. La filtration conduit à l'obtention de 1801,2 g de produit sans catalyseur et transparent. Une évaporation à 150°C et sous 5 mbars dans un évaporateur rotatif permet d'éliminer les volatils. On obtient environ 945 g de produit final POS (A) d'une viscosité de 2650 mPa.S et de structure représentée par la formule: $M^*-D_{21}-D'_{3,6}-D^{OE}_{9,7}-D^{AGE}_{16,4}-T^{OR}_{4}-T_{1,6}-M^*$ avec :
$D = (CH_3)_2SiO_{2/2}$, $D' = (CH_3)HSiO_{2/2}$, $D^{OE} = (CH_3)R'SiO_{2/2}$, $D^{AGE} = (CH_3)R''SiO_{2/2}$, $T\ SiO_{3/2}$, $T^{OR} = (RO)(CH_3)SiO_{2/2}$
avec:M* = 79 % de motifs M + 6% de motifs $D^{OR}$+ 15 % de motifs $D^{OH}$ (en % molaire)
$D^{OR} = (CH_3)_2R^aSiO_{1/2}$
$D^{OH} = (CH_3)_2(OH)SiO_{1/2}$
$R^a$= résidu polyether;
$R' = -(CH_2)_3-O-(CH_2CH_2-O)_{8-9}-CH_3$ ; et
R"=

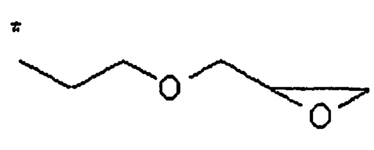

(le symbole * représente le carbone qui est lié à l'atome de silicium).

Exemple 2: reticulation sous UV:

Les produits utilisés dans les compositions des exemples sont les suivants :

Silicone POS (B) : (viscosité 23,5 mPa.s) :

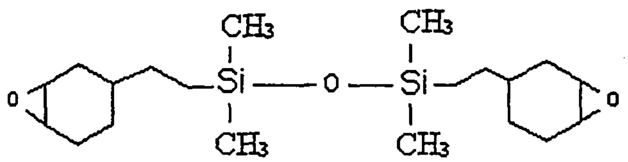

Photo-amorceur cationique (P1):

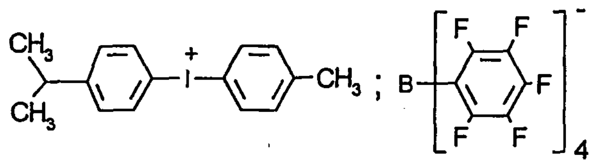

(P1)

On prépare une composition en mélangeant :

a) 100 parties du POS (A) obtenu dans l'exemple 1 ;
b) 15,57 parties de sel LiTFSi (LiTFSI = lithium bistrifluorométhanesulfonamide) ; et
c) 3 parties d'un système catalytique photo-amorceur cationique de polymérisation comprenant :

c-1) 76,3 % en poids du silicone (B),
c-2) 21,6 % en poids de photo-amorceur Rhodorsil Photoiniator 2074® vendu par la société Rhodia de structure (P1),
c-3) 1,9 % en poids d'une solution composée de 4% en poids de Tinuvin-765® (vendu par la société CIBA) dans du silicone (B), et
c-3) 0,2 % en poids d'un photosensibilisateur (e) 1-chloro-4-propoxythioxanthone.

La composition est réticulée au moyen d'une lampe UV sur tout le spectre de lampe (UV + visible) avec un temps de passage sous la lampe de l'ordre de 3 à 5 m/min ce qui permet d'avoir des temps de réticulation d'environ 10s. Deux réseaux ont été obtenus, le premier (R1) suite à un passage à 10 ampères et le second (R2) grâce à deux passages de 10 ampères et 17 ampères. On obtient des réseaux sous forme de film d'épaisseur moyenne comprise entre 50 et - 250 $\mu$m.

Exemple 3 : Mesure de la conductivité ionique.

Les mesures de conductivité ionique des réseaux réticulés selon l'exemple 2 ainsi que leurs évolutions avec la température ont été réalisées via l'utilisation de la technique de spectrométrie d'impédance complexe, technique permettant de déterminer les grandeurs caractéristiques de systèmes conducteurs telles leur résistance ou leur capacité. Le film d'électrolyte solide est inséré et maintenu fixe entre deux électrodes en acier inox, le tout constituant la cellule de mesure principale. Ce dispositif expérimental est positionné à l'intérieur d'une étuve permettant un balayage en températures compris entre -20 et +80°C. La cellule est reliée à un impédancemètre Hewlett Packard HD4192A couplé à un ordinateur pour l'enregistrement des données. La cellule est soumise à une tension sinusoïdale de 100 mV crête à crête dans un domaine de fréquences allant de $5.10^{-3}$ Hz à 13 MHz. Pour chaque échantillon, la mesure est réalisée après ¾ d'heure de maintien à la température de consigne.

Dans de ces conditions, les conductivités ioniques des réseaux réticulés selon l'exemple 2 à 25°C, telles que mesurées par la méthode d'impédance complexe sont comprises entre $10^{-4}$ et $5x10^{-6}$ Siemens/cm.

## Revendications

**1.** Composition polymérisable et/ou réticulable sous irradiation, de préférence actinique et/ou par faisceau(x) d'électrons, par voie cationique et/ou radicalaire, pour électrolyte de batterie **caractérisée en ce qu'**elle comprend :

(a) au moins un polyorganosiloxane (POS) (A) comprenant des motifs siloxyles de formule (I):

$$R^1_xR^2_yR^3_zSiO_{(4-x-y-z)/2} \qquad (I)$$

formule dans laquelle les divers symboles ont la signification suivante :

x, y et z sont des nombres entiers avec $1 \leq x+y+z \leq 3$ ;
les radicaux $R^1$, $R^2$ et $R^3$ sont identiques ou différents entre eux et représentent un radical alkyle en $C_1$-$C_{12}$, linéaire ou ramifié, éventuellement substitué, un radical cycloalkyle en $C_5$-$C_{10}$, éventuellement substitué, un radical aryle en $C_6$-$C_{18}$, éventuellement substitué, un radical aralkyle, éventuellement substitué ou un radical
$-OR^4$ où $R^4$ représente un hydrogène, un radical alkyle, linéaire ou ramifié, ayant de 1 à 15 atomes de carbone avec comme conditions que le POS (A)° comprend par molécule :

- au moins 2 motifs siloxyles de formule (I) dont un des radicaux comprend une fonction de type époxy (Epx) et éventuellement une fonction de type éther (Eth) ; et
- au moins un des motifs siloxyles de formule (I) comprend au moins un radical portant une fonction éther de polyoxyalkylène (Poa) ;

(b) au moins un sel électrolyte; et
(c) une quantité efficace d'au moins un photo-amorceur cationique et/ou radicalaire.

**2.** Composition polymérisable et/ou réticulable sous irradiation, de préférence actinique et/ou par faisceau(x) d'électrons, par voie cationique et/ou radicalaire, pour électrolyte de batterie selon la revendication 1 **caractérisée en ce que** la composition comprend au moins un POS (B) de formule (II)

$$R^1_xR^2_yR^3_zSiO_{(4-x-y-z)/2} \qquad (II)$$

formule dans laquelle les divers symboles ont la signification suivante :

x, y et z sont des nombres entiers avec $1 \leq x+y+z \leq 3$ ;
les radicaux $R^1$, $R^2$ et $R^3$ sont identiques ou différents entre eux et représentent un radical alkyle en $C_1$-$C_{12}$, linéaire ou ramifié, éventuellement substitué, un radical cycloalkyle en $C_5$-$C_{10}$, éventuellement substitué, un radical aryle en $C_6$-$C_{18}$, éventuellement substitué, un radical aralkyle, éventuellement substitué ou un radical $-OR^4$ où $R^4$ représente un hydrogène, un radical alkyle, linéaire ou ramifié, ayant de 1 à 15 atomes de carbone ; avec comme condition que le POS (B) comprend par molécule au moins 2 motifs siloxyles comprenant une fonction de type époxy (Epx) et éventuellement une fonction de type éther (Eth).

**3.** Composition polymérisable et/ou réticulable sous irradiation, de préférence actinique et/ou par faisceau(x) d'électrons, par voie cationique et/ou radicalaire, pour électrolyte de batterie selon l'une des revendications précédentes **caractérisée en ce que** le radical porteur d'une fonction de type époxy (Epx) et pouvant éventuellement porter une fonction de type éther (Eth) est choisi parmi les radicaux suivants :

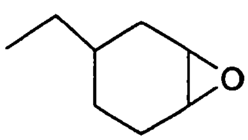
(III) ;

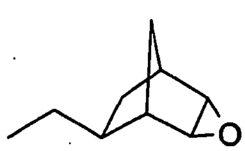
(IV) ;

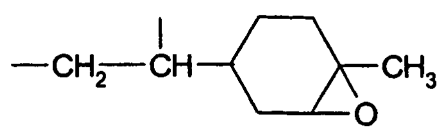
(V)

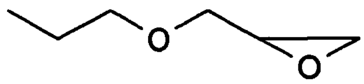

; et

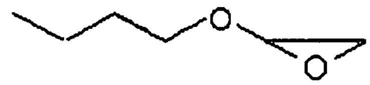

(VI) (VII)

4. Composition polymérisable et/ou réticulable sous irradiation, de préférence actinique et/ou par faisceau(x) d'électrons, par voie cationique et/ou radicalaire, pour électrolyte de batterie selon la revendication 1 **caractérisée en ce que** le groupement éther de polyoxyalkylène (Poa) est de type éther de polyoxyéthylène et/ou éther de polyoxypropylène.

5. Composition polymérisable et/ou réticulable sous irradiation, de préférence actinique et/ou par faisceau(x) d'électrons, par voie cationique et/ou radicalaire, pour électrolyte de batterie selon l'une des revendications précédentes **caractérisée en ce que** le (POS) (A) est un copolymère essentiellement linéaire statistique, séquencé ou à bloc, de formule générale moyenne (VIII) suivante :

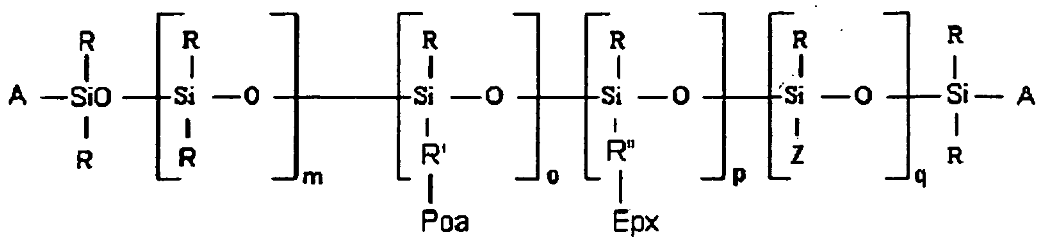

(VIII)

et pouvant éventuellement comporter des motifs de formule $RSiO_{3/2}$ (T) ;
formule dans laquelle :

- les symboles R, identiques ou différents entre eux, représentent chacun un radical alkyle en $C_1$-$C_{12}$, linéaire ou ramifié, éventuellement substitué, un radical aryle en $C_6$-$C_{18}$, éventuellement substitué, un radical cycloalkyle en $C_5$-$C_{10}$, éventuellement substitué ou un radical aralkyle, éventuellement substitué ;
- les symbole Z, identiques ou différents entre eux, représentent chacun un radical hydroxyle ou alkoxyle, linéaire ou ramifié, ayant de 1 à 15 atomes de carbone ;
- les symboles R', identiques ou différents entre eux, représentent chacun un radical comprenant de 2 à 50 atomes de carbone ;
- les symboles Poa, identiques ou différents entre eux, représentent chacun des groupements de type éther de polyoxyalkylène ;
- les symboles R", identiques ou différents entre eux, représentent chacun un radical comprenant de 2 à 50 atomes de carbone, radical qui peut éventuellement comprendre des fonctions de type éther -O- ;
- les symboles (Epx) représentent une fonction époxy, cette fonction étant soit présente en terminaison de la chaîne hydrocarbonée R", du type :

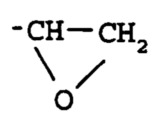

soit, dans une position intermédiaire de la chaîne hydrocarbonée R", du type:

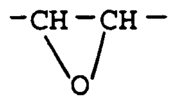

cette position intermédiaire de cette fonction époxy pouvant être présente sur une partie cyclique de la chaîne, en particulier un cycle ayant de 5 à 7 membres ;
- les symboles A, identiques ou différents entre eux, représentent chacun un radical monovalent choisi parmi -R, H, -R"-Epx et -$OR^4$ où $R^4$ représente un hydrogène, un radical alkyle, linéaire ou ramifié, ayant de 1 à 15 atomes de carbone ;
- m est un nombre entier ou fractionnaire supérieur ou égal à 0, de préférence compris entre 5 et 200, et encore plus préférentiellement entre 1 0 et 100;
- o est un nombre entier ou fractionnaire supérieur ou égal à 1, de préférence compris entre 1 et 100, et encore plus préférentiellement compris entre 5 et 30 ;
- p est un nombre entier ou fractionnaire supérieur ou égal à 2, de préférence compris entre 3 et 200, et encore plus préférentiellement compris entre 10 et 40 ; et
- q est un nombre entier ou fractionnaire supérieur ou égal à 0 ; de préférence compris entre 0 et 10.

**6.** Composition polymérisable et/ou réticulable sous irradiation, de préférence actinique et/ou par faisceau(x) d'électrons, par voie cationique et/ou radicalaire, pour électrolyte de batterie selon la revendication 5 **caractérisée en ce que** les nombres m, o et p sont choisi de manière à satisfaire la condition suivante :

- le ratio $(m+ p+q)/o \leq 10$

**7.** Composition polymérisable et/ou réticulable sous irradiation, de préférence actinique et/ou par faisceau(x) d'électrons, par voie cationique et/ou radicalaire, pour électrolyte de batterie selon la revendication 5 **caractérisée en ce que** les groupements de type (-R"-Epx) sont choisi parmi les groupements (III), (IV), (V), (VI) et (VII) tels que défini dans la revendication 3.

**8.** Composition polymérisable et/ou réticulable sous irradiation, de préférence actinique et/ou par faisceau(x) d'électrons, par voie cationique et/ou radicalaire, pour électrolyte de batterie selon la revendication 5 **caractérisée en ce que** les groupements (-R'-Poa) sont choisis parmi :
$-(CH_2)_3-O-(CH_2CH_2-O)_m-CH_3$ ; $-(CH_2)_2-O-(CH_2CH_2-O)_m-CH_3$ ; $-(CH_2)_3-O-(CH(CH_3)-CH_{2-}-O)_m-CH_3$ et $-(CH_2)_2-O-(CH(CH_3)-CH_2-O)_m-CH_3$ avec $m \leq 14$.

**9.** Composition polymérisable et/ou réticulable sous irradiation, de préférence actinique et/ou par faisceau(x) d'électrons, par voie cationique et/ou radicalaire, pour électrolyte de batterie selon la revendication 1 **caractérisée en ce que** le sel électrolyte(b) est constitué :

- d'un cation choisi parmi le groupe constitué par les entités suivantes : les cations métalliques, les ions ammoniums, les ions amidiniums et les ions guanidiums ; et
- d'un anion choisi parmi le groupe constitué par les entités suivantes : les ions chlorures, les ions bromures, les ions iodures, les ions perchlorates, les ions thyocyanates, les ions tétrafluoroborates, les ions nitrates, $AsF6^-$, $PF6^-$, les ions stéarylsulfonates, les ions trifluorométhanesulfonates, les ions octylsulfonates, les ions dodécylbenzènesulfonates, $R^4SO_3^-$, $(R^4SO_2)$ $(R^5SO_2)N^-$ et $(R^4SO_2)$ $(R^5SO_2)$ $(R^6SO_2)C^-$, dans chaque formule les radicaux $R^4$, $R^5$ et $R^6$ sont identiques ou différents et représentent des groupements électro-attracteurs.

**10.** Composition polymérisable et/ou réticulable sous irradiation, de préférence actinique et/ou par faisceau(x) d'électrons, par voie cationique et/ou radicalaire, pour électrolyte de batterie selon la revendication 9 **caractérisée en ce que** les radicaux $R^4$, $R^5$ et $R^6$ sont des groupements électro-attracteurs de type perfluoroaryle ou perfluoroalkyle comprenant de 1 à 6 atomes de carbone.

**11.** Composition polymérisable et/ou réticulable sous irradiation, de préférence actinique et/ou par faisceau(x) d'électrons, par voie cationique et/ou radicalaire, pour électrolyte de batterie selon la revendication 9 **caractérisée en ce que** le sel électrolyte(b) comprend un cation métallique choisi parmi les métaux alcalins et alcalino-terreux des groupes 1 et 2 de la classification périodique.

**12.** Composition polymérisable et/ou réticulable sous irradiation, de préférence actinique et/ou par faisceau(x) d'électrons, par voie cationique et/ou radicalaire, pour électrolyte de batterie selon la revendication 11 **caractérisée en ce que** le cation métallique est de type lithium.

**13.** Composition polymérisable et/ou réticulable sous irradiation, de préférence actinique et/ou par faisceau(x) d'électrons, par voie cationique et/ou radicalaire, pour électrolyte de batterie selon les revendications 1 ou 11 **caractérisée en ce que** le sel électrolyte(b) est choisi parmi le groupe constitué par les composés suivants :

$LiClO_4$, $LiBF_4$, $LiPF_6$, $LiAsF_6$, $LiCF_3SO_3$, $LiN(CF_3SO_2)_2$, $Li(C_2F_5SO_2)_2$ et un mélange de ces composés.

**14.** Composition polymérisable et/ou réticulable sous irradiation, de préférence actinique et/ou par faisceau(x) d'électrons, par voie cationique et/ou radicalaire, pour électrolyte de batterie selon la revendication 11 **caractérisée en ce que** le cation métallique est choisi parmi les métaux de transition.

**15.** Composition polymérisable et/ou réticulable sous irradiation, de préférence actinique et/ou par faisceau(x) d'électrons, par voie cationique et/ou radicalaire, pour électrolyte de batterie selon la revendication 14 **caractérisée en ce que** le cation métallique est choisi parmi le groupe constitué du manganèse, fer, cobalt, nickel, cuivre, zinc, calcium, manganèse et argent.

**16.** Composition polymérisable et/ou réticulable sous irradiation, de préférence actinique et/ou par faisceau(x) d'électrons, par voie cationique et/ou radicalaire, pour électrolyte de batterie selon l'une des revendications précédentes **caractérisée en ce qu'**elle comprend un électrolyte organique (d).

**17.** Composition polymérisable et/ou réticulable sous irradiation, de préférence actinique et/ou par faisceau(x) d'électrons, par voie cationique et/ou radicalaire, pour électrolyte de batterie selon la revendication 16 **caractérisée en ce que** l'électrolyte organique (d) est choisi parmi le groupe constitué des composés suivants :

carbonate de propylène, carbonate d'éthylène, carbonate de diéthyle, carbonate de diméthyle, carbonate d'éthylméthyle, γ-butyrolactone, 1,3-dioxolane, diméthoxyéthane, tétrahydrofurane, diméthyl sulfoxide et polyéthylèneglycol diméthyléther.

**18.** Composition polymérisable et/ou réticulable sous irradiation, de préférence actinique et/ou par faisceau(x) d'électrons, par voie cationique et/ou radicalaire, pour électrolyte de batterie selon la revendication 1 **caractérisée en ce que** le photo-amorceur cationique de polymérisation et/ou réticulation (c) est un borate d'onium.

**19.** Composition polymérisable et/ou réticulable sous irradiation, de préférence actinique et/ou par faisceau(x) d'électrons, par voie cationique et/ou radicalaire, pour électrolyte de batterie selon la revendication 18 **caractérisée en ce que** le borate d'onium est choisi parmi ceux de formule dont l'entité cationique est sélectionnée parmi :

a) les sels d'onium de formule (IX) :

$$[(R^1)_n - A - (R^2)_m]^+ \qquad (IX)$$

formule dans laquelle :

- A représente un élément des groupes 15 à 17 tel que par exemple : I, S, Se, P ou N ;
- $R^1$ représente un radical aryle carbocyclique ou hétérocyclique en $C_6$-$C_{20}$, ledit radical hétérocyclique pouvant contenir comme hétéroéléments de l'azote ou du soufre ;
- $R^2$ représente $R^1$ ou un radical alkyle ou eux linéaire ou ramifié en $C_1$-$C_{30}$ ; lesdits radicaux $R^1$ et $R^2$ étant éventuellement substitués par un groupement alcoxy en $C_1$-$C_{25}$, alkyle en $C_1$-$C_{25}$, nitro, chloro, bromo, cyano, càrboxy, ester ou mercapto ;
- n est un nombre entier allant de 1 à v + 1, v étant la valence de l'élément A ; et
- m est un nombre entier allant de 0 à v - 1 avec n + m = v + 1,

b) les sels organométalliques de formule (X) :

$$(L^1L^2L^3M)^{+q}$$

formule dans laquelle :

- M représente un métal du groupe 4 à 10, notamment du fer, manganèse, chrome, cobalt,
- $L^1$ représente 1 ligand lié au métal M par des électrons $\pi$, ligand choisi parmi les ligands $\eta^3$-alkyl, $\eta^{5-}$ cyclopendadiènyl et $\eta^{7-}$ cycloheptratriènyl et les composés $\eta^6$ - aromatiques choisis parmi les ligands $\eta^6$-benzène éventuellement substitués et les composés ayant de 2 à 4 cycles condensés, chaque cycle étant capable de contribuer à la couche de valence du métal M par 3 à 8 électrons $\pi$ ;
- $L^2$ représente un ligand lié au métal M par des électrons $\pi$, ligand choisi parmi les ligands $\eta^7$-cycloheptatriènyl et les composés $\eta^6$-aromatiques choisis parmi les ligands $\eta^6$- benzène éventuellement substitués et les composés ayant de 2 à 4 cycles condensés, chaque cycle étant capable de contribuer à la couche de valence du métal M par 6 ou 7 électrons $\pi$ ; et
- $L^3$ représente de 0 à 3 ligands identiques ou différents liés au métal M par des électrons $\sigma$, ligand(s) choisi (s) parmi CO et $NO_2^+$ ; la charge électronique totale q du complexe à laquelle contribuent $L^1$, $L^2$ et $L^3$ et la charge ionique du métal M étant positive et égale à 1 ou 2 ;

c) les sels d'oxoisothiochromanium possédant la formule (XI) :

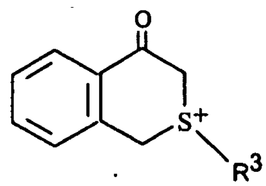

où le radical $R^3$ représente un radical alkyle, linéaire ou ramifié, en $C_1$-$C_{20}$ , et
d) les sels organométalliques de formule (XIII) :

$$(L^1L^2L^3M)^{+q} \qquad (XIII)$$

formule dans laquelle :

- M représente un métal du groupe 4 à 10 ;
- $L^1$ et $L^2$ représentent chacun 1 ligand lié au métal M par des électrons $\pi$,
- $L^3$ représente de 0 à 3 ligands identiques ou différents liés au métal M par des électrons $\sigma$, ligand(s) choisi (s) parmi CO et $NO_2^+$ ; et
- la charge électronique totale q étant positive et égale à 1 ou 2.

**20.** Composition polymérisable et/ou réticulable sous irradiation, de préférence actinique et/ou par faisceau(x) d'électrons, par voie cationique et/ou radicalaire, pour électrolyte de batterie selon la revendication 18 **caractérisée en ce que** le photo-amorceur cationique de polymérisation et/ ou réticulation (c) de type borate est choisi parmi ceux de formule dont l'entité anionique borate a pour formule (XII) :

$$[B\ X_a\ R_b]^- \qquad (XII)$$

formule dans laquelle :

- a et b sont des nombres entiers allant de 0 à 4 avec a + b = 4 ;
- les symboles X représentent un atome d'halogène (chlore, fluor) avec a = 0 à 3 et une fonction OH (avec a = 0 à 2) ,
- les symboles R sont identiques ou différents et représentent :

. un radical phényle substitué par au moins un groupement électro-attracteur choisi parmi CF3, NO2, CN ou par au moins 2 atomes de fluor, ce lorsque l'entité cationique est un onium d'un élément des groupes 15 à 17,
. un radical phényle substitué par au moins un élément ou un groupement électro-attracteur choisi parmi un atome de fluor CF3, N02, CN, ce lorsque l'entité cationique est un complexe organométallique d'un élément des groupes 4 à 10, et/ou
. un radical aryle contenant au moins deux noyaux aromatiques, éventuellement substitué par au moins un élément ou un groupement électro-attracteur choisi parmi un atome de fluor CF3, NO2, CN, quelle que

soit l'entité cationique.

**21.** Composition polymérisable et/ou réticulable sous irradiation, de préférence actinique et/ou par faisceau(x) d'électrons, par voie cationique et/ou radicalaire, pour électrolyte de batterie selon la revendication 20 **caractérisée en ce que** l'entité anionique du borate est choisi parmi le groupe constitué de :
$[B(C_6F_5)_4]^-$ $[B(C_6H_4CF_3)_4]^-$ $[B(C_6H_4CF_3)_4]^-$
$[(C_6F_5)_2BF_2]^-$ $[C_6F_5BF_3]^-$ $[B(C_6H_3F_2)_4]^-$ $[B(C_6F_4OCF_3)_4]^-$

**22.** Composition polymérisable et/ou réticulable sous irradiation, de préférence actinique et/ou par faisceau(x) d'électrons, par voie cationique et/ou radicalaire, pour électrolyte de batterie selon la revendication 19 **caractérisée en ce que** l'entité cationique est choisi parmi le groupe constitué de :
$[(\Phi)_2I]^+$ $[C_8H_{17}\text{-O-}\Phi\text{-I-}\Phi]^+$ $[(\Phi\text{-}CH_3)_2I]^+$
$[C_{12}H_{25}\text{-}\Phi\text{-I-}\Phi]^+$ $[(C_8H_{17}\text{-O-}\Phi)_2I]^+$ $[(C_8H_{17}\text{-O-}\Phi\text{-I-}\Phi)]^+$
$[(\Phi)_3S]^+$ $[(\Phi)_2\text{-S-}\Phi\text{-O-}C_8H_{17}]^+$ $[(CH_3\text{-}\Phi\text{-I-}\Phi\text{-}CH(CH_3)_2]^+$
$[\Phi\text{-S-}\Phi\text{-S-}(\Phi)_2]^+$ $[(C_{12}H_{25}\text{-}\Phi)_2I]^+$ $[(CH_3\text{-}\Phi\text{-I-}\Phi\text{-}OC_2H_5]^+$
I(η5 - cyclopentadiènyle) (η6 - toluène) Fe+,
(η5 - cyclopentadiènyle) (η6 - méthyl1-naphtalène) Fe+, et
(η5 - cyclopentadiènyle) (η6 - cumène) Fe+

**23.** Composition polymérisable et/ou réticulable sous irradiation, de préférence actinique et/ou par faisceau(x) d'électrons, par voie cationique et/ou radicalaire, pour électrolyte de batterie selon la revendication 18 **caractérisée en ce que** le photo-amorceur cationique de polymérisation et/ou réticulation (c) de type borate est choisi parmi le groupe constitué de :
$[(\Phi)_2I]^+$, $[B(C_6F_5)_4]^-$ $[(C_8H_{17})\text{-O-}\Phi\text{-I-}\Phi)]^+$, $[B(C_6F_5)_4]^-$
$[C_{12}H_{25}\text{-}\Phi\text{-I-}\Phi]^+$, $[B(C_6F_5)_4]^-$ $[(C_8H_{17}\text{-O-}(\Phi)_2I]^+$ , $[B(C_6F_5)_4]^-$
$[(C_8H_{17})\text{-O-}\Phi\text{-I-}\Phi)]^+$ , $[B(C_6F_5)_4]^-$ $[(\Phi)_3S]^+$ , $[B(C_6F_5)_4]^-$
$[(\Phi)_2S\text{-}\Phi\text{-O-}C_8H_{17}]^+$, $[B(C_6H_4CF_3)_4]^-$ $[(C_{12}H_{25}\text{-}\Phi)_2I]^+$, $[B(C_6F_5)_4]^-$
$[(\Phi)_3S]^+$, $[B(C_6F_4OCF_3)_4]^-$ $[(\Phi\text{-}CH_3)_2I]^+$, $[B(C_6F_5)_4]^-$
$[(\Phi\text{-}CH_3)_2I]^+$, $[B(C_6F_4OCF_3)_4]^-$
$[CH_3\text{-}\Phi\text{-I-}\Phi\text{-}CH(CH_3)_2]^+$, $[B(C_6F_5)_4]^-$
($\eta^5$ - cyclopentadiènyle) ($\eta^6$ - toluène) $Fe^+$, $[B(C_6F_5)_4]^-$
($\eta^5$ - cyclopentadiènyle) ($\eta^6$ - méthyl1-naphtalène) $Fe^+$, $[B(C_6F_5)_4]^-$
($\eta^5$ - cyclopentadiènyle) ($\eta^6$ - cumène) $Fe^+$, $[B(C_6F_5)_4]^-$
et leur mélange.

**24.** Composition polymérisable et/ou réticulable sous irradiation, de préférence actinique et/ou par faisceau(x) d'électrons, par voie cationique et/ou radicalaire, pour électrolyte de batterie selon l'une des revendications précédentes **caractérisée en qu'**elle comprend au moins un photosensibilisateur (e) hydrocarboné aromatique à un ou plusieurs noyaux aromatiques substitués ou non, ayant une absorption résiduelle de la lumière comprise entre 200 et 500 nm.

**25.** Composition polymérisable et/ou réticulable sous irradiation, de préférence actinique et/ou par faisceau(x) d'électrons, par voie cationique et/ou radicalaire, pour électrolyte de batterie selon la revendication 24 **caractérisée que** le photosensibilisateur (e) est choisi parmi le groupe constitué de :

4,4'diméthoxybenzoïne ; 2-4 diéthylthioxanthone ;
2-éthylanthraquinone ; 2-méthylanthraquinone ;
1,8-dihydroxyanthraquinone ; dibenzoylpéroxyde ;
2,2-diméthoxy-2-phénylacétophénone ; benzoïne ;
2-hydroxy-2méthylpropiophénone ; benzaldéhyde ;
4-(2-hydroxyéthoxy)phényl-(2-hydroxy-2-méthylpropyl) cétone ;
benzoylacétone;

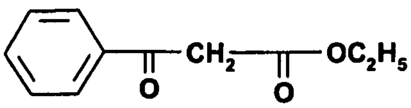
,

2-isopropylthioxanthone ; 1-chloro-4-propoxythioxanthone ;
4-isopropylthioxanthone,

et leur mélange.

**26.** Un électrolyte polymère pour batterie obtenu par polymérisation et/ou réticulation par voie cationique et/ou radicalaire d'une composition selon l'une des revendications 1 à 25.

**27.** Une batterie polymère comprenant un électrolyte polymère selon la revendication 26 disposé entre une anode et une cathode.

**28.** Une batterie polymère selon la revendication 27 **caractérisée en ce qu'**au moins un des constituants de la cathode est choisi parmi le groupe constitué des composés suivants :

lithium métallique, alliages de lithium, matériaux inorganiques comprenant des insertions de lithium et matériaux carbonatés comprenant des insertions de lithium.

**29.** Utilisation d'une batterie polymère selon la revendication 27 ou 28 dans un satellite géostationnaire ou un véhicule électrique et hybride.

## Claims

**1.** Composition which can be polymerized and/or crosslinked under irradiation, preferably actinic irradiation and/or by (an) electron beam(s), by the cationic and/or radical route, for a battery electrolyte, **characterized in that** it comprises:

(a) at least one polyorganosiloxane (POS) (A) comprising siloxyl units of formula (I):

$$R^1_xR^2_yR^3_zSiO_{(4-x-y-z)/2} \qquad (I)$$

in which formula the various symbols have the following meanings:

x, y and z are integers with 1 ≤x+y+z≤ 3;
the $R^1$, $R^2$ and $R^3$ radicals are identical to or different from one another and represent an optionally substituted, linear or branched, $C_1$-$C_{12}$ alkyl radical, an optionally substituted $C_5$-$C_{10}$ cycloalkyl radical, an optionally substituted $C_6$-$C_{18}$ aryl radical, an optionally substituted aralkyl radical or an -$OR^4$ radical where $R^4$ represents a hydrogen or a linear or branched alkyl radical having from 1 to 15 carbon atoms, and with the conditions that the POS (A) comprises, per molecule:

- at least 2 siloxyl units of formula (I), one of the radicals of which comprises a functional group of epoxy type (Epx) and optionally a functional group of ether type (Eth); and
- at least one of the siloxyl units of formula (I) comprises at least one radical carrying a polyoxyalkylene (Poa) ether functional group;

(b) at least one electrolyte salt; and
(c) an effective amount of at least one cationic and/or radical photoinitiator.

**2.** Composition which can be polymerized and/or crosslinked under irradiation, preferably actinic irradiation and/or by (an) electron beam(s), by the cationic and/or radical route, for a battery electrolyte according to Claim 1, **characterized in that** the composition comprises at least one POS (B) of formula (II)

$$R^1_xR^2_yR^3_zSiO_{(4-x-y-z)/2} \qquad (II)$$

in which formula the various symbols have the following meanings:

x, y and z are integers with 1 ≤x+y+z≤ 3;
the $R^1$, $R^2$ and $R^3$ radicals are identical to or different from one another and represent an optionally substituted, linear or branched, $C_1$-$C_{12}$ alkyl radical, an optionally substituted $C_5$-$C_{10}$ cycloalkyl radical, an optionally substituted $C_6$-$C_{18}$ aryl radical, an optionally substituted aralkyl radical or an -$OR^4$ radical where $R^4$ represents a hydrogen or a linear or branched alkyl radical having from 1 to 15 carbon atoms;
with the condition that the POS (B) comprises, per molecule, at least 2 siloxyl units comprising a functional

group of epoxy type (Epx) and optionally a functional group of ether type (Eth).

**3.** Composition which can be polymerized and/or crosslinked under irradiation, preferably actinic irradiation and/or by (an) electron beam(s), by the cationic and/or radical route, for a battery electrolyte according to either of the preceding claims, **characterized in that** the radical carrying a functional group of epoxy type (Epx) which can optionally carry a functional group of ether type (Eth) is chosen from the following radicals:

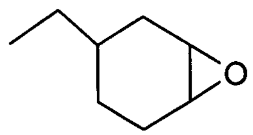 ; 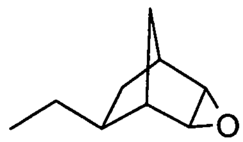 ; 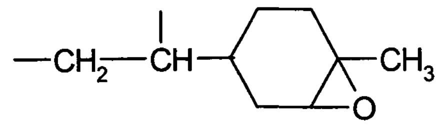

(III) (IV)

(V)

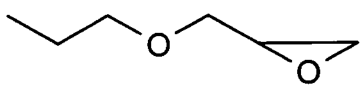 and 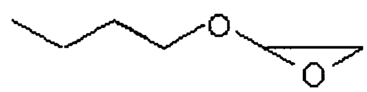

(VI) (VII)

**4.** Composition which can be polymerized and/or crosslinked under irradiation, preferably actinic irradiation and/or by (an) electron beam(s), by the cationic and/or radical route, for a battery electrolyte according to Claim 1, **characterized in that** the polyoxyalkylene (Poa) ether group is of polyoxyethylene ether and/or polyoxypropylene ether type.

**5.** Composition which can be polymerized and/or crosslinked under irradiation, preferably actinic irradiation and/or by (an) electron beam(s), by the cationic and/or radical route, for a battery electrolyte according to one of the preceding claims, **characterized in that** the POS (A) is an essentially linear random or block copolymer of following mean general formula (VIII):

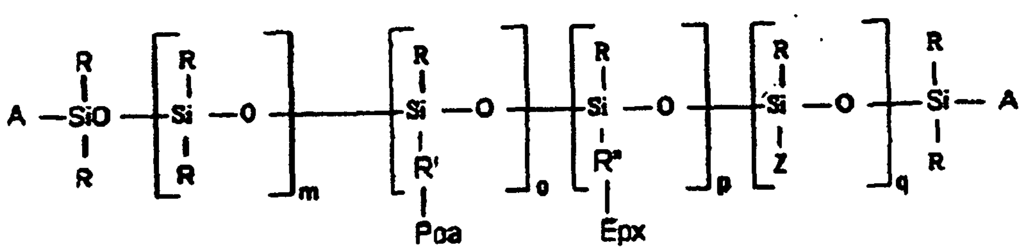

**(VIII)**

which can optionally comprise units of formula $RSiO_{3/2}$ (T);
in which formula:

- the R symbols, which are identical to or different from one another, each represent an optionally substituted, linear or branched, $C_1$-$C_{12}$ alkyl radical, an optionally substituted $C_6$-$C_{18}$ aryl radical, an optionally substituted $C_5$-$C_{10}$ cycloalkyl radical or an optionally substituted aralkyl radical;
- the Z symbols, which are identical to or different from one another, each represent a hydroxyl radical or a linear or branched alkoxyl radical having from 1 to 15 carbon atoms;

- the R' symbols, which are identical to or different from one another, each represent a radical comprising from 2 to 50 carbon atoms;

- the Poa symbols, which are identical to or different from one another, each represent groups of polyoxyalkylene ether type;

- the R" symbols, which are identical to or different from one another, each represent a radical comprising from 2 to 50 carbon atoms, which radical can optionally comprise functional groups of -O- ether type;

- the (Epx) symbols represent an epoxy functional group, this functional group being either present as ending of the R" hydrocarbon chain, of the following type:

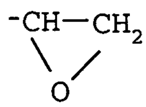

or in an intermediate position of the R" hydrocarbon chain, of the following type:

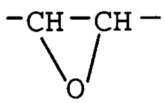

it being possible for this intermediate position of this epoxy functional group to be present on a cyclic part of the chain, in particular a ring having from 5 to 7 members;

- the A symbols, which are identical to or different from one another, each represent a monovalent radical chosen from -R, H, -R"-Epx and $-OR^4$, where $R^4$ represents a hydrogen or a linear or branched alkyl radical having from 1 to 15 carbon atoms;

- m is an integer or fractional number greater than or equal to 0, preferably between 5 and 200 and more preferably still between 10 and 100;

- o is an integer or fractional number greater than or equal to 1, preferably between 1 and 100 and more preferably still between 5 and 30;

- p is an integer or fractional number greater than or equal to 2, preferably between 3 and 200 and more preferably still between 10 and 40; and

- q is an integer or fractional number greater than or equal to 0; preferably between 0 and 10.

6. Composition which can be polymerized and/or crosslinked under irradiation, preferably actinic irradiation and/or by (an) electron beam(s), by the cationic and/or radical route, for a battery electrolyte according to Claim 5, **characterized in that** the numbers m, o and p are chosen so as to satisfy the following condition:

- the ratio $(m+p+q)/o \leq 10$.

7. Composition which can be polymerized and/or crosslinked under irradiation, preferably actinic irradiation and/or by (an) electron beam(s), by the cationic and/or radical route, for a battery electrolyte according to Claim 5, **characterized in that** the groups of -R"-Epx type are chosen from the (III), (IV), (V), (VI) and (VII) groups as defined in claim 3.

8. Composition which can be polymerized and/or crosslinked under irradiation, preferably actinic irradiation and/or by (an) electron beam(s), by the cationic and/or radical route, for a battery electrolyte according to Claim 5, **characterized in that** the -R'-Poa groups are chosen from:

$-(CH_2)_3-O-(CH_2CH_2-O)_m-CH_3$ ; $-(CH_2)_2-O-(CH_2CH_2-O)_m-CH_3$ ;
$-(CH_2)_3-O-(CH(CH_3)-CH_2-O)_m-CH_3$ and $-(CH_2)_2-O-(CH(CH_3)-CH_2-O)_m-CH_3$
with $m \leq 14$.

9. Composition which can be polymerized and/or crosslinked under irradiation, preferably actinic irradiation and/or by (an) electron beam(s), by the cationic and/or radical route, for a battery electrolyte according to Claim 1, **characterized in that** the electrolyte salt (b) is composed:

- of a cation chosen from the group consisting of the following entities: metal cations, ammonium ions, amidinium ions and guanidinium ions; and

- of an anion chosen from the group consisting of the following entities: chloride ions, bromide ions, iodide ions, perchlorate ions, thiocyanate ions, tetrafluoroborate ions, nitrate ions, $AsF_6^-$, $PF_6^-$, stearylsulfonate ions, trifluoromethanesulfonate ions, octylsulfonate ions, dodecylbenzenesulfonate ions, $R^4SO_3^-$, $(R^4SO_2)(R^5SO_2)N^-$ and $(R^4SO_2)(R^5SO_2)(R^6SO_2)C^-$; in each formula, the $R^4$, $R^5$ and $R^6$ radicals are identical or different and represent electron-withdrawing groups.

**10.** Composition which can be polymerized and/or crosslinked under irradiation, preferably actinic irradiation and/or by (an) electron beam(s), by the cationic and/or radical route, for a battery electrolyte according to Claim 9, **characterized in that** the $R^4$, $R^5$ and $R^6$ radicals are electron-withdrawing groups of perfluoroaryl or perfluoroalkyl type, the perfluoroalkyl groups comprising from 1 to 6 carbon atoms.

**11.** Composition which can be polymerized and/or crosslinked under irradiation, preferably actinic irradiation and/or by (an) electron beam(s), by the cationic and/or radical route, for a battery electrolyte according to Claim 9, **characterized in that** the electrolyte salt (b) comprises a metal cation chosen from alkali metals and alkaline earth metals of Groups 1 and 2 of the Periodic Table.

**12.** Composition which can be polymerized and/or crosslinked under irradiation, preferably actinic irradiation and/or by (an) electron beam(s), by the cationic and/or radical route, for a battery electrolyte according to Claim 11, **characterized in that** the metal cation is of lithium type.

**13.** Composition which can be polymerized and/or crosslinked under irradiation, preferably actinic irradiation and/or by (an) electron beam(s), by the cationic and/or radical route, for a battery electrolyte according to Claims 1 or 11, **characterized in that** the electrolyte salt (b) is chosen from the group consisting of the following compounds:

$LiClO_4$, $LiBF_4$, $LiPF_6$, $LiAsF_6$, $LiCF_3SO_3$, $LiN\ (CF_3SO_2)_2$, $LiN(C_2F_5SO_2)_2$ and a mixture of these compounds.

**14.** Composition which can be polymerized and/or crosslinked under irradiation, preferably actinic irradiation and/or by (an) electron beam(s), by the cationic and/or radical route, for a battery electrolyte according to Claim 11, **characterized in that** the metal cation is chosen from transition metals.

**15.** Composition which can be polymerized and/or crosslinked under irradiation, preferably actinic irradiation and/or by (an) electron beam(s), by the cationic and/or radical route, for a battery electrolyte according to Claim 14, **characterized in that** the metal cation is chosen from the group consisting of manganese, iron, cobalt, nickel, copper, zinc, calcium and silver.

**16.** Composition which can be polymerized and/or crosslinked under irradiation, preferably actinic irradiation and/or by (an) electron beam(s), by the cationic and/or radical route, for a battery electrolyte according to one of the preceding claims, **characterized in that** it comprises an organic electrolyte (d).

**17.** Composition which can be polymerized and/or crosslinked under irradiation, preferably actinic irradiation and/or by (an) electron beam(s), by the cationic and/or radical route, for a battery electrolyte according to Claim 16, **characterized in that** the organic electrolyte (d) is chosen from the group consisting of the following compounds:

propylene carbonate, ethylene carbonate, diethyl carbonate, dimethyl carbonate, ethyl methyl carbonate, γ-butyrolactone, 1,3-dioxolane, dimethoxyethane, tetrahydrofuran, dimethyl sulfoxide and polyethylene glycol dimethyl ether.

**18.** Composition which can be polymerized and/or crosslinked under irradiation, preferably actinic irradiation and/or by (an) electron beam(s), by the cationic and/or radical route, for a battery electrolyte according to Claim 1, **characterized in that** the polymerization and/or crosslinking cationic photoinitiator (c) is an onium borate.

**19.** Composition which can be polymerized and/or crosslinked under irradiation, preferably actinic irradiation and/or by (an) electron beam(s), by the cationic and/or radical route, for a battery electrolyte according to Claim 18, **characterized in that** the onium borate is chosen from those with a formula for which the cationic entity is selected from:

a) onium salts of formula (IX):

$$[(R^1)_n - A - (R^2)_m]^+ \qquad (IX)$$

in which formula:

- A represents an element from groups 15 to 17, such as, for example: I, S, Se, P or N;
- $R^1$ represents a $C_6$-$C_{20}$ carbocyclic or heterocyclic aryl radical, it being possible for said heterocyclic radical to comprise nitrogen or sulfur as heteroelements;
- $R^2$ represents $R^1$ or a linear or branched $C_1$-$C_{30}$ alkyl or those radical; said $R^1$ and $R^2$ radicals optionally being substituted by a $C_1$-$C_{25}$ alkoxy, $C_1$-$C_{25}$ alkyl, nitro, chloro, bromo, cyano, carboxyl, ester or mercapto group;
- n is an integer ranging from 1 to v + 1, v being the valency of the element A; and
- m is an integer ranging from 0 to v - 1, with n + m = v + 1,

b) organometallic salts of formula (X):

$$(L^1L^2L^3M)^{q+}$$

in which formula:

- M represents a metal from Groups 4 to 10, in particular iron, manganese, chromium or cobalt;
- $L^1$ represents a ligand bonded to the metal M via $\pi$ electrons, which ligand is chosen from $\eta^3$-alkyl, $\eta^5$-cyclopentadienyl and $\eta^7$-cycloheptatrienyl ligands and $\eta^6$-aromatic compounds chosen from $\eta^6$-benzene ligands which are optionally substituted and compounds having from 2 to 4 condensed rings, each ring being capable of contributing via 3 to 8 $\pi$ electrons to the valence layer of the metal M;
- $L^2$ represents a ligand bonded to the metal M via $\pi$ electrons, which ligand is chosen from $\eta^7$-cycloheptatrienyl ligands and $\eta^6$-aromatic compounds chosen from $\eta^6$-benzene ligands which are optionally substituted and compounds having from 2 to 4 condensed rings, each ring being capable of contributing via 6 or 7 $\pi$ electrons to the valence layer of the metal M; and
- $L^3$ represents from 0 to 3 identical or different ligands bonded to the metal M via $\sigma$ electrons, which ligand (s) is (are) chosen from CO and $NO_2^+$; the total electronic charge q of the complex to which $L^1$, $L^2$ and $L^3$ and the ionic charge of the metal M contribute being positive and equal to 1 or 2;

c) oxoisothiochromanium salts having the formula (XI):

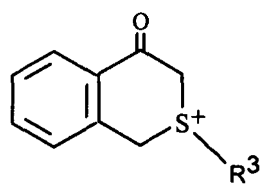

(XI)

where the $R^3$ radical represents a linear or branched $C_1$-$C_{20}$ alkyl radical, and
d) the organometallic salts of formula (XIII):

$$(L^1L^2L^3M)^{q+} \qquad (XIII)$$

in which formula:

- M represents a metal from Groups 4 to 10;
- $L^1$ and $L^2$ each represent a ligand bonded to the metal M via $\pi$ electrons,
- $L^3$ represents from 0 to 3 identical or different ligands bonded to the metal M via $\sigma$ electrons, which ligand (s) is (are) chosen from CO and $NO_2^+$; and
- the total electronic charge q being positive and equal to 1 or 2.

**20.** Composition which can be polymerized and/or crosslinked under irradiation, preferably actinic irradiation and/or by (an) electron beam(s), by the cationic and/or radical route, for a battery electrolyte according to Claim 18, **characterized in that** the polymerization and/or crosslinking cationic photoinitiator (c) of borate type is chosen from those

with a formula for which the borate anionic entity has the formula (XII):

$$[BX_aR_b]^- \qquad (XII)$$

in which formula:

- a and b are integers ranging from 0 to 4 with a + b = 4;
- the X symbols represent a halogen atom (chlorine, fluorine) with a = 0 to 3 and an OH functional group (with a = 0 to 2),
- the R symbols are identical or different and represent:

  · a phenyl radical substituted by at least one electron-withdrawing group chosen from $CF_3$, $NO_2$ or CN or by at least 2 fluorine atoms, this being the case when the cationic entity is an onium of an element from Groups 15 to 17,
  · a phenyl radical substituted by at least one electron-withdrawing element or at least one electron-withdrawing group chosen from a fluorine atom, $CF_3$, $NO_2$ or CN, this being the case when the cationic entity is an organometallic complex of an element from the Groups 4 to 10, and/or
  · an aryl radical comprising at least two aromatic rings which is optionally substituted by at least one electron-withdrawing element or at least one electron-withdrawing group chosen from a fluorine atom, $CF_3$, $NO_2$ or CN, whatever the cationic entity.

**21.** Composition which can be polymerized and/or crosslinked under irradiation, preferably actinic irradiation and/or by (an) electron beam(s), by the cationic and/or radical route, for a battery electrolyte according to Claim 20, **characterized in that** the anionic entity of the borate is chosen from the group consisting of:
$[B(C_6F_5)_4]^-$ $[B(C_6H_4CF_3)_4]^-$ $[B(C_6H_4CF_3)_4]^-$
$[(C_6F_5)_2BF_2]^-$ $[C_6F_5BF_3]^-$ $[B(C_6H_3F_2)_4]^-$
$[B(C_6F_4OCF_3)_4]^-$.

**22.** Composition which can be polymerized and/or crosslinked under irradiation, preferably actinic irradiation and/or by (an) electron beam(s), by the cationic and/or radical route, for a battery electrolyte according to Claim 19, **characterized in that** the cationic entity is chosen from the group consisting of:
$[((\Phi)_2I]^+$ $[C_8H_{17}\text{-O-}\Phi\text{-I-}\Phi]^+$ $[(\Phi\text{-}CH_3)_2I]^+$
$[C_{12}H_{25}\text{-}\Phi\text{-I-}\Phi]^+$ $[(C_8H_{17}\text{-O-}\Phi)_2I]^+$ $[C_8H_{17}\text{-O-}\Phi\text{- I-}\Phi]^+$
$[(\Phi)_3S]^+$ $[(\Phi)_2\text{-S-}\Phi\text{-O-}C_8H_{17}]^+$ $[CH_3\text{-}\Phi\text{-I-}\Phi\text{-CH }(CH_3)_2]^+$
$[\Phi\text{-S-}\Phi\text{-S- }(\Phi)_2]^+$ $(C_{12}H_{25}\text{-}\Phi)_2I]^+$ $[CH_3\text{-}\Phi\text{-I-}\Phi\text{-}OC_2H_5]^+$
(η5-cyclopentadienyl) (η6-toluene)$Fe^+$,
(η5-cyclopentadienyl) (η6-1-methylnaphthalene) $Fe^+$, and
(η5-cyclopentadienyl) (η6-cumene) $Fe^+$.

**23.** Composition which can be polymerized and/or crosslinked under irradiation, preferably actinic irradiation and/or by (an) electron beam(s), by the cationic and/or radical route, for a battery electrolyte according to Claim 18, **characterized in that** the polymerization and/or crosslinking cationic photoinitiator (c) of borate type is chosen from the group consisting of:
$[(\Phi)_2I]^+[B(C_6F_5)_4]^-$ $[(C_8H_{17})\text{-O-}\Phi\text{-I-}\Phi\ ]^+[B(C_6F_5)_4]^-$
$[C_{12}H_{25}\text{-}\Phi\text{-I-}\Phi]^+[B(C_6F_5)_4]^-$ $[(C_8H_{17}\text{-O-}\Phi\ )_2I]+[B(C_6F_5)_4]^-$
$[(C_8H_{17})\text{-O-}\Phi\text{-I-}\Phi]^+[B(C_6F_5)_4]^-$ $[(\Phi)_3S]^+[B(C_6F_5)_4]^-$
$[(\Phi)_2S\text{-}\Phi\text{-O-}C_8H_{17}]^+[B(C_6H_4CF_3)_4]^-$ $[(C_{12}H_{25}\text{-}\Phi)_2I]^+[B\ (C_6F_5)_4]^-$
$[(\Phi)_3S]^+[B(C_6F_4OCF_3)_4]^-$ $[(\Phi\text{-}CH_3)_2I]^+[B(C_6F_5)_4]^-$
$[(\Phi\text{-}CH_3)_2I]^+[B(C_6F_4OCF_3)_4]^-$ $[CH_3\text{-}\Phi\text{-I-}\Phi\text{-}CH(CH_3)_2]^+[B(C_6F_5)_4]^-$
($\eta^5$-cyclopentadienyl)($\eta^6$-toluene)$Fe^+[B(C_6F_5)_4]^-$
($\eta^5$-cyclopentadienyl)($\eta^6$-1-methylnaphthalene)$Fe^+[B(C_6F_5)_4]^-$
($\eta^5$-cyclopentadienyl) ($\eta^6$-cumene)$Fe+[B(C_6F_5)_4]^-$
and their mixture.

**24.** Composition which can be polymerized and/or crosslinked under irradiation, preferably actinic irradiation and/or by (an) electron beam(s), by the cationic and/or radical route, for a battery electrolyte according to one of the preceding claims, **characterized in that** it comprises at least one aromatic hydrocarbon photosensitizer (e) comprising one or more substituted or unsubstituted aromatic rings having a residual light absorption of between 200 and 500 nm.

**25.** Composition which can be polymerized and/or crosslinked under irradiation, preferably actinic irradiation and/or by (an) electron beam(s), by the cationic and/or radical route, for a battery electrolyte according to Claim 24, **characterized in that** the photosensitizer (e) is chosen from the group consisting of:
4,4'-dimethoxybenzoin, 2,4-diethylthioxanthone,
2-ethylanthraquinone, 2-methylanthraquinone,
1,8-dihydroxyanthraquinone, dibenzoyl peroxide,
2,2-dimethoxy-2-phenylacetophenone, benzoin,
2-hydroxy-2-methylpropiophenone, benzaldehyde,
4-(2-hydroxyethoxy)phenyl (2-hydroxy-2-methylpropyl) ketone,
benzoylacetone,

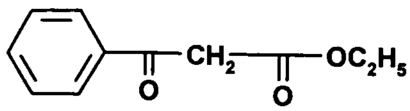

,

2-isopropylthioxanthone, 1-chloro-4-propoxythioxanthone,
4-isopropylthioxanthone
and their mixture.

**26.** Polymer electrolyte for a battery obtained by polymerization and/or crosslinking by the cationic and/or radical route of a composition according to one of Claims 1 to 25.

**27.** Polymer battery comprising a polymer electrolyte according to Claim 26 positioned between an anode and a cathode.

**28.** Polymer battery according to Claim 27, **characterized in that** at least one of the constituents of the cathode is chosen from the group consisting of the following compounds:

lithium metal, lithium alloys, inorganic materials comprising lithium insertions and carbonate materials comprising lithium insertions.

**29.** Use of a polymer battery according to Claim 27 or 28 in a geostationary satellite or an electric and hybrid vehicle.

**Patentansprüche**

**1.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte, **dadurch gekennzeichnet, daß** sie folgendes umfaßt:

(a) mindestens ein Polyorganosiloxan (POS) (A) mit Siloxylgruppierungen der Formel (I):

$$R^1_xR^2_yR^3_zSiO_{(4-x-y-z)/2} \qquad (I)$$

worin die verschiedenen Symbole die folgende Bedeutung haben:

x, y und z sind ganze Zahlen mit $1 \leq x+y+z \leq 3$;
die Reste $R^1$, $R^2$ und $R^3$ sind gleich oder voneinander verschieden und stehen für einen gegebenenfalls substituierten linearen oder verzweigten $C_1$-$C_{12}$-Alkylrest, einen gegebenenfalls substituierten $C_5$-$C_{10}$-Cycloalkylrest, einen gegebenenfalls substituierten $C_6$-$C_{18}$-Arylrest, einen gegebenenfalls substituierten Aralkylrest oder einen Rest -$OR^4$, worin $R^4$ für Wasserstoff oder einen linearen oder verzweigten Alkylrest mit 1 bis 15 Kohlenstoffatomen steht, mit den Maßgaben, daß das POS (A)° pro Molekül folgendes umfaßt:

- mindestens 2 Siloxylgruppierungen der Formel (I), wobei einer der Reste davon eine Funktion vom Epoxid-Typ (Epx) und gegebenenfalls eine Funktion vom Ether-Typ (Eth) umfaßt; und
- mindestens eine der Siloxylgruppierungen der Formel (I) mindestens einen Rest mit einer Polyoxyalkylenetherfunktion (Poa-Etherfunktion) umfaßt;

(b) mindestens ein Elektrolytsalz und

(c) eine wirksame Menge eines kationischen und/oder radikalischen Photoinitiators.

**2.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 1, **dadurch gekennzeichnet, daß** sie mindestens ein POS (B) der Formel (II) :

$$R^1_xR^2_yR^3_zSiO_{(4-x-y-z)/2} \qquad \text{(II)}$$

worin die verschiedenen Symbole die folgende Bedeutung haben:

x, y und z sind ganze Zahlen mit $1 \leq x+y+z \leq 3$;

die Reste $R^1$, $R^2$ und $R^3$ sind gleich oder voneinander verschieden und stehen für einen gegebenenfalls substituierten linearen oder verzweigten $C_1$-$C_{12}$-Alkylrest, einen gegebenenfalls substituierten $C_5$-$C_{10}$-Cycloalkylrest, einen gegebenenfalls substituierten $C_6$-$C_{18}$-Arylrest, einen gegebenenfalls substituierten Aralkylrest oder einen Rest -$OR^4$, worin $R^4$ für Wasserstoff oder einen linearen oder verzweigten Alkylrest mit 1 bis 15 Kohlenstoffatomen steht;

umfaßt; mit der Maßgabe, daß das POS (B) pro Molekül mindestens 2 Siloxylgruppierungen mit einer Funktion vom Epoxid-Typ (Epx) und gegebenenfalls einer Funktion vom Ether-Typ (Eth) umfaßt.

**3.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach einem der vorhergehenden Ansprüche, **dadurch gekennzeichnet, daß** der eine Funktion vom Epoxid-Typ (Epx) und gegebenenfalls eine Funktion vom Ether-Typ (Eth) tragende Rest unter den folgenden Resten ausgewählt ist:

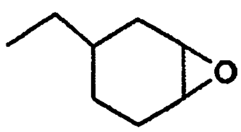
(III)
;
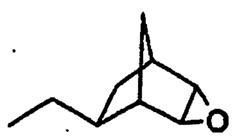
(IV)
;
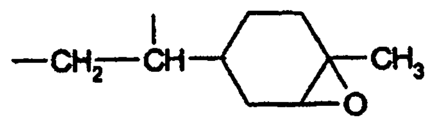
(V)

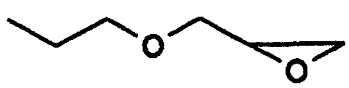
(VI)
und
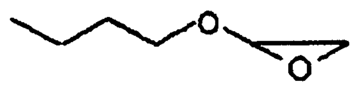
(VII)
.

**4.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 1, **dadurch gekennzeichnet, daß** die Polyoxyalkylenethergruppe (Poa-Ethergruppe) vom Polyoxyethylenether- und/oder Polyoxypropylenether-Typ ist.

**5.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach einem der vorhergehenden Ansprüche, **dadurch gekennzeichnet, daß** das (POS) (A) ein im wesentlichen lineares statistisch oder blockartig aufgebautes Copolymer der folgenden durchschnittlichen allgemeinen Formel (VIII) ist:

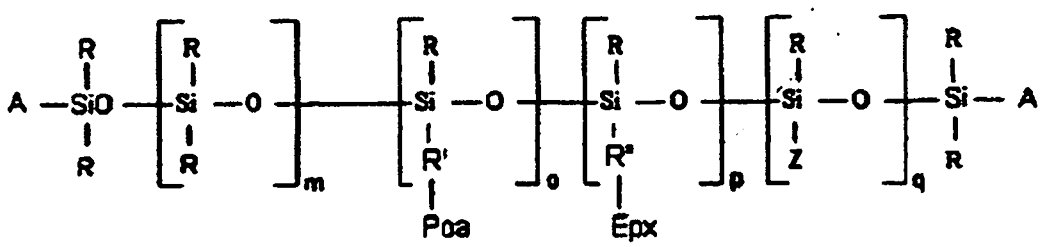

(VIII)

das gegebenenfalls Gruppierungen der Formel $RSiO_{3/2}$ (T) enthalten kann;
worin:

- die Symbole R gleich oder voneinander verschieden sind und jeweils für einen gegebenenfalls substituierten linearen oder verzweigten $C_1$-$C_{12}$-Alkylrest, einen gegebenenfalls substituierten $C_6$-$C_{18}$-Arylrest, einen gegebenenfalls substituierten $C_5$-$C_{10}$-Cycloalkylrest oder einen gegebenenfalls substituierten Aralkylrest stehen;
- die Symbole Z gleich oder voneinander verschieden sind und jeweils für einen Hydroxylrest oder einen linearen oder verzweigten Alkoxylrest mit 1 bis 15 Kohlenstoffatomen stehen;
- die Symbole R' gleich oder voneinander verschieden sind und jeweils für einen Rest mit 2 bis 50 Kohlenstoffatomen stehen;
- die Symbole Poa gleich oder voneinander verschieden sind und jeweils für Gruppen vom Polyoxyalkylenether-Typ stehen;
- die Symbole R" gleich oder voneinander verschieden sind und jeweils für einen Rest mit 2 bis 50 Kohlenstoffatomen stehen, der gegebenenfalls Funktionen vom -O-Ether-Typ umfassen kann;
- die Symbole (Epx) für eine Epoxidfunktion stehen, die entweder am Ende der Kohlenwasserstoffkette R" vom Typ:

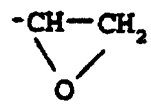

oder in einer intermediären Position der Kohlenwasserstoffkette R" vom Typ:

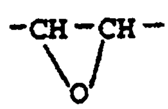

vorliegen kann, wobei diese intermediäre Position dieser Epoxidfunktion an einem cyclischen Teil der Kette, insbesondere einem 5- bis 7-gliedrigen Ring, vorliegen kann;
- die Symbole A gleich oder voneinander verschieden sind und jeweils für einen unter -R, H, -R"-Epx und $-OR^4$, worin $R^4$ für Wasserstoff oder einen linearen oder verzweigten Alkylrest mit 1 bis 15 Kohlenstoffatomen steht, ausgewählten einwertigen Rest stehen;
- m eine ganze oder gebrochene Zahl größer gleich 0, vorzugsweise zwischen 5 und 200 und noch weiter bevorzugt zwischen 10 und 100, ist,
- o eine ganze oder gebrochene Zahl größer gleich 1, vorzugsweise zwischen 1 und 100 und noch weiter bevorzugt zwischen 5 und 30, ist,
- p eine ganze oder gebrochene Zahl größer gleich 2, vorzugsweise zwischen 3 und 200 und noch weiter bevorzugt zwischen 10 und 40, ist,
- q eine ganze oder gebrochene Zahl größer gleich 0, vorzugsweise zwischen 0 und 10, ist.

**6.** Unter Bestrahlung, vorzugsweise aktinischer Bestrahlung und/oder mit Elektronenstrahl(en), kationisch und/oder

radikalisch polymerisierbare und/oder vernetzbare Zusammensetzung für Batterieelektrolyte nach Anspruch 5, **dadurch gekennzeichnet, daß** die Zahlen m, o und p so gewählt sind, daß die folgende Bedingung erfüllt ist:

- das Verhältnis $(m+p+q)/o \leq 10$.

**7.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 5, **dadurch gekennzeichnet, daß** die Gruppen vom Typ (-R''-Epx) unter den Gruppen (III), (IV), (V), (VI) und (VII) gemäß Anspruch 3 ausgewählt sind.

**8.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 5, **dadurch gekennzeichnet, daß** die Gruppen (-R'-Poa) unter
$-(CH_2)_3-O-(CH_2CH_2-O)_m-CH_3$; $-(CH_2)_2-O-(CH_2CH_2-O)_m-CH_3$:
$-(CH_2)_3-O-(CH(CH_3)-CH_2-O)_m-CH_3$ und $-(CH_2)_2-O-(CH(CH_3)-CH_2-O)_m-CH_3$ mit $m \leq 14$
ausgewählt sind.

**9.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 1, **dadurch gekennzeichnet, daß** das Elektrolytsalz (b) aus

- einem Kation, das aus der Gruppe bestehend aus den folgenden Einheiten ausgewählt ist: Metallkationen, Ammoniumionen, Amidiniumionen und Guanidiniumionen; und
- einem Anion, das aus der Gruppe bestehend aus den folgenden Einheiten ausgewählt ist: Chloridionen, Bromidionen, Iodidionen, Perchlorationen, Thiocyanationen, Tetrafluoroborationen, Nitrationen, $AsF_6^-$, $PF_6^-$, Stearylsulfonationen, Trifluormethanesulfonationen, Octylsulfonationen, Dodecylbenzolsulfonationen, $R^4SO_3^-$, $(R^4SO_2)(R^5SO_2)N^-$ und $(R^4SO_2)(R^5SO_2)(R^6SO_2)C^-$, wobei die Reste $R^4$, $R^5$ und $R^6$ in jeder Formel gleich oder verschieden sind und für elektronenanziehende Gruppen stehen;

besteht.

**10.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 9, **dadurch gekennzeichnet, daß** es sich bei den Resten $R^4$, $R^5$ und $R^6$ um elektronenanziehende Gruppen vom Perfluoraryl-Typ oder Perfluoralkyl-Typ mit 1 bis 6 Kohlenstoffatomen handelt.

**11.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 9, **dadurch gekennzeichnet, daß** das Elektrolytsalz (b) ein Metallkation, das unter Alkali- und Erdalkalimetallen der Gruppen 1 und 2 des Periodensystems ausgewählt ist, umfaßt.

**12.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 11, **dadurch gekennzeichnet, daß** das Metallkation vom Lithium-Typ ist.

**13.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach den Ansprüchen 1 oder 11, **dadurch gekennzeichnet, daß** das Elektrolytsalz (b) aus der Gruppe bestehend aus den folgenden Verbindungen ausgewählt ist: $LiClO_4$, $LiBF_4$, $LiPF_6$, $LiAsF_6$, $LiCF_3SO_3$, $LiN(CF_3SO_2)_2$, $LiN(C_2F_5SO_2)_2$ und einer Mischung dieser Verbindungen.

**14.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 11, **dadurch gekennzeichnet, daß** das Metallkation unter Übergangsmetallen ausgewählt ist.

**15.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 14, **dadurch gekennzeichnet, daß** das Metallkation aus der Gruppe bestehend aus Mangan, Eisen, Cobalt, Nickel,

Kupfer, Zink, Calcium, Mangan und Silber ausgewählt ist.

**16.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach einem der vorhergehenden Ansprüche, **dadurch gekennzeichnet, daß** sie einen organischen Elektrolyt (d) umfaßt.

**17.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 16, **dadurch gekennzeichnet, daß** der organische Elektrolyt (d) aus der Gruppe bestehend aus den folgenden Verbindungen ausgewählt ist: Propylencarbonat, Ethylencarbonat, Diethylcarbonat, Dimethylcarbonat, Ethylmethylcarbonat, $\gamma$-Butyrolacton, 1,3-Dioxolan, Dimethoxyethan, Tetrahydrofuran, Dimethylsulfoxid und Polyethylenglykoldimethylether.

**18.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 1, **dadurch gekennzeichnet, daß** es sich bei dem kationischen Polymerisations- und/oder Vernetzungsinitiator (c) um ein Oniumborat handelt.

**19.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 18, **dadurch gekennzeichnet, daß** das Oniumborat unter denjenigen der Formel, deren kationische Einheit unter:

a) Oniumsalzen der Formel (IX):

$$[(R^1)_n - A - (R^2)_m]^+ \qquad (IX)$$

worin:

- A für ein Element der Gruppen 15 bis 17 wie beispielsweise I, S, Se, P oder N steht;
- $R^1$ für einen carbocyclischen oder heterocyclischen $C_6$-$C_{20}$-Arylrest steht, wobei der heterocyclische Rest als Heteroelemente Stickstoff oder Schwefel enthalten kann;
- $R^2$ für $R^1$ oder einen linearen oder verzweigten $C_1$-$C_{30}$-Alkyl- oder -Alkenylrest steht; wobei die Reste $R^1$ und $R^2$ gegebenenfalls durch eine $C_1$-$C_{25}$-Alkoxy-, $C_1$-$C_{25}$-Alkyl-, Nitro-, Chlor-, Brom-, Cyano-, Carboxy-, Ester- oder Mercaptogruppe substituiert sind;
- n eine ganze Zahl von 1 bis v + 1 ist, wobei v die Wertigkeit des Elements A ist; und
- m eine ganze Zahl von 0 bis v - 1 ist, wobei n + m = v + 1;

b) metallorganischen Salzen der Formel (X):

$$(L^1L^2L^3M)^{+q}$$

worin:

- M für ein Metall der Gruppe 4 bis 10, insbesondere Eisen, Mangan, Chrom oder Cobalt, steht;
- $L^1$ für einen Liganden steht, der über $\pi$-Elektronen an das Metall M gebunden ist und unter $\eta^3$-Alkyl-, $\eta^5$-Cyclopentadienyl- und $\eta^7$-Cycloheptatrienylliganden und $\eta^6$-aromatischen Verbindungen, die unter gegebenenfalls substituierten $\eta^6$-Benzolliganden und Verbindungen mit 2 bis 4 kondensierten Ringen ausgewählt sind, wobei jeder Ring durch 3 bis 8 $\pi$-Elektronen zur Valenzschale des Metalls M beitragen kann, ausgewählt ist;
- $L^2$ für einen Liganden steht, der über $\pi$-Elektronen an das Metall M gebunden ist und unter $\eta^7$-Cycloheptatrienylliganden und $\eta^6$-aromatischen Verbindungen, die unter gegebenenfalls substituierten $\eta^6$-Benzolliganden und Verbindungen mit 2 bis 4 kondensierten Ringen ausgewählt sind, wobei jeder Ring durch 6 oder 7 $\pi$-Elektronen zur Valenzschale des Metalls M beitragen kann, ausgewählt ist; und
- $L^3$ für 0 bis 3 gleiche oder verschiedene Liganden steht, die über $\sigma$-Elektronen an das Metall M gebunden sind und unter CO und $NO_2^+$ ausgewählt sind; wobei die elektronische Gesamtladung q des Komplexes, zu der $L^1$, $L^2$, $L^3$ und die Ionenladung des Metalls M beitragen, positiv und gleich 1 oder 2 ist;

c) Oxoisothiochromaniumsalzen der Formel (XI):

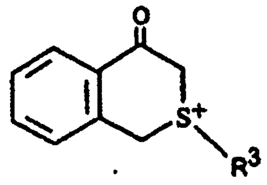

worin der Rest $R^3$ für einen linearen oder verzweigten $C_1$-$C_{20}$-Alkylrest steht; und

d) metallorganischen Salzen der Formel (XIII):

$$(L^1L^2L^3M)^{+q} \qquad (XIII)$$

worin:

- M für ein Metall der Gruppe 4 bis 10 steht;
- $L^1$ und $L^2$ jeweils für einen Liganden stehen, der über π-Elektronen an das Metall M gebunden ist;
- $L^3$ für 0 bis 3 gleiche oder verschiedene Liganden stehen, die über σ-Elektronen an das Metall M gebunden sind und unter CO und $NO_2^+$ ausgewählt sind; und
- die elektronische Gesamtladung q positiv und gleich 1 oder 2 ist;

ausgewählt ist, ausgewählt ist.

**20.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 18, **dadurch gekennzeichnet, daß** der kationische Polymerisations- und/oder Vernetzungsphotoinitiator (c) vom Borat-Typ unter denjenigen der Formel, deren anionische Borateinheit die Formel (XII):

$$[BX_aR_b]^- \qquad (XII)$$

worin:

- a und b für ganze Zahlen von 0 bis 4 stehen, wobei a + b = 4;
- die Symbole X für ein Halogenatom (Chlor, Fluor) mit a = 0 bis 3 und eine OH-Funktion (mit a = 0 bis 2) stehen;
- die Symbole R gleich oder verschieden sind und für folgendes stehen:

. einen Phenylrest, der durch mindestens eine elektronenanziehende Gruppe, die unter CF3, N02 und CN ausgewählt ist, oder durch mindestens zwei Fluoratome substituiert ist, wenn es sich bei der kationischen Einheit um ein Onium eines Elements der Gruppen 15 bis 17 handelt,

. einen Phenylrest, der durch mindestens ein elektronenanziehendes Element oder eine elektronenanziehende Gruppe, die unter einem Fluoratom, CF3, N02 und CN ausgewählt ist, substituiert ist, wenn es sich bei der kationischen Einheit um einen metallorganischen Komplex eines Elements der Gruppen 4 bis 10 handelt und/oder

. einen Arylrest mit mindestens zwei aromatischen Kernen, der gegebenenfalls durch mindestens ein elektronenanziehendes Element oder eine elektronenanziehende Gruppe, die unter einem Fluoratom, CF3, N02 und CN ausgewählt ist, substituiert ist, egal worum es sich bei der kationischen Einheit handelt;

aufweist, ausgewählt ist.

**21.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 20, **dadurch gekennzeichnet, daß** die anionische Borateinheit aus der Gruppe bestehend aus:
$[B(C_6F_5)_4]^-$ $[B(CeH_4CF_3)_4]^-$ $[B(CeH_4CF_3)_4]^-$
$[(C_6F_5)_2BF_2]^-$ $[C_6F_5BF_3]^-$ $[B(C_6H_3F_2)_4]^-$ $[B(C_6F_4OCF_3)_4]^-$
ausgewählt ist.

**22.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 19,

**dadurch gekennzeichnet, daß** die kationische Einheit aus der Gruppe bestehend aus:
$[(\Phi)_2I]^+$ $[C_8H_{17}\text{-}O\text{-}\Phi\text{-}I\text{-}\Phi]^+$ $[(\Phi\text{-}CH_3I]^+$
$[C_{12}H_{25}\text{-}\Phi\text{-}I\text{-}\Phi]^+$ $[(C_8H_{17}\text{-}O\text{-}\Phi)_2I]^+$ $[(C_8H_{17}\text{-}O\text{-}\Phi\text{-}I\text{-}\Phi]^+$
$[(\Phi)_3S]^+$ $[(\Phi_2\text{-}S\text{-}\Phi\text{-}O\text{-}C_8H_{17}]^+$ $[(CH_3\text{-}\Phi\text{-}I\text{-}\Phi\text{-}CH(CH_3)_2]^+$
$[\Phi\text{-}S\text{-}\Phi\text{-}S\text{-}(\Phi)_2]^+$ $[(C_{12}H_{25}\text{-}\Phi)_2I]^+$ $[(CH_3\text{-}\Phi\text{-}I\text{-}\Phi\text{-}OC_2H_5]^+$
($\eta^5$-Cyclopentadienyl) ($\eta^6$-toluol) $Fe^+$,
($\eta^5$-Cyclopentadienyl) ($\eta^6$-methyl-1-naphthalin) $Fe^+$
und
($\eta^5$-Cyclopentadienyl) ($\eta^6$-cumol) $Fe^+$
ausgewählt ist.

**23.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 18, **dadurch gekennzeichnet, daß** der kationische Polymerisations- und/oder Vernetzungsphotoinitiator (c) vom Borat-Typ aus der Gruppe bestehend aus:
$[(\Phi)_2I]^+$ $[B(C_6F_5)_4]^-$ $[(C_8H_{17})\text{-}O\text{-}\Phi\text{-}I\text{-}\Phi)]^+$, $[B(C_6F_5)_4]^-$
$[C_{12}H_{25}\text{-}\Phi\text{-}I\text{-}\Phi]^+$ $[B(C_6F_5)_4]^-$
$[(C_8H_{17}\text{-}O\text{-}\Phi)_2I]^+$, $[B(C_6F_5)4]^-$
$[(C_8H_{17}\text{-}O\text{-}\Phi\text{-}I\text{-}\Phi)]^+$, $[B(C_6F_5)_4]^-$
$[(\Phi)_3S]^+$, $[B(C_6F_5)_4]^-$ $[(\Phi)_2\text{-}S\text{-}\Phi\text{-}O\text{-}C_8H_{17}]^+$, $[B(C_6H_4CF_3)_4]^-$
$[(C_{12}H_{25}\text{-}\Phi)_2I]^+$, $[B(C_6F_5)_4]^-$
$[(\Phi)_3S]^+$, $[B(C_6F_4OCF_3)_4]^-$ $[(\Phi\text{-}CH_3)_2I]^+$, $[B(C_6F_5)_4]^-$
$[(\Phi\text{-}CH_3)_2I]^+$, $[B(C_6F_4OCF_3)_4]^-$
$[CH_3\text{-}\Phi\text{-}I\text{-}\Phi\text{-}CH(CH_3)_2]^+$, $[B(C_6F_5)_4]^-$
($\eta^5$-Cyclopentadienyl)($\eta^6$-toluol) $Fe^+$, $[B(C_6F_5)_4]^-$
($\eta^5$-Cyclopentadienyl)($\eta^6$-methyl-1-naphthalin)-$Fe^+$, $[B(C_6F_5)_4]^-$,
($\eta^5$-Cyclopentadienyl)($\eta^6$-cumol) $Fe^+$, $[B(C_6F_5)_4]^-$
und einer Mischung davon
ausgewählt ist.

**24.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach einem der vorhergehenden Ansprüche, **dadurch gekennzeichnet, daß** sie mindestens einen aromatischen Kohlenwasserstoff-Photosensibilisator (e) mit einem oder mehreren gegebenenfalls substituierten aromatischen Kernen mit einer Restlichtabsorption zwischen 200 und 500 nm umfaßt.

**25.** Unter Bestrahlung, vorzugsweise aktinischer Bestrahlung und/oder mit Elektronenstrahl(en), kationisch und/oder radikalisch polymerisierbare und/oder vernetzbare Zusammensetzung für Batterieelektrolyte nach Anspruch 24, **dadurch gekennzeichnet, daß** der Photosensibilisator (e) aus der Gruppe bestehend aus:
4,4'-Dimethoxybenzoin; 2,4-Diethylthioxanthon;
2-Ethylanthrachinon; 2-Methylanthrachinon;
1,8-Dihydroxyanthrachinon; Dibenzoylperoxid;
2,2-Dimethoxy-2-phenylacetophenon; Benzoin;
2-Hydroxy-2-methylpropiophenon; Benzaldehyd;
4-(2-Hydroxyethoxy)phenyl(2-hydroxy-2-methylpropyl)keton;
Benzoylaceton;

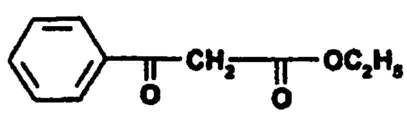
,

2-Isopropylthioxanthon; 1-Chlor-4-propoxythioxanthon;
4-Isopropylthioxanthon
und einer Mischung davon
ausgewählt ist.

**26.** Polymerelektrolyt für Batterien, erhalten durch kationische und/oder radikalische Polymerisation und/oder Vernetzung einer Zusammensetzung nach einem der Ansprüche 1 bis 25.

**27.** Polymerbatterie, umfassend einen zwischen einer Anode und einer Kathode angeordneten Polymerelektrolyt nach Anspruch 26.

**28.** Polymerbatterie nach Anspruch 27, **dadurch gekennzeichnet, daß** mindestens einer der Bestandteile der Kathode aus der Gruppe bestehend aus den folgenden Verbindungen ausgewählt ist:

Lithiummetall, Lithiumlegierungen, anorganischen Substanzen mit Lithiumeinlagerungen und Carbonatmaterialien mit Lithiumeinlagerungen.

**29.** Verwendung einer Polymerbatterie nach Anspruch 27 oder 28 in einem geostationären Satelliten oder einem Elektro- und Hybridfahrzeug.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 200025323 A
- EP 0562897 A
- EP 0562922 A
- US 4138255 A
- US 4310469 A
- US 4939069 A
- US 4278751 A
- US 4147552 A


### Littérature non-brevet citée dans la description


- *Chem. & Eng. News,* 04 Février 1985, vol. 63 (5), 26